(19)

Europäisches
Patentamt
European
Patent Office
Office européen
des brevets

(11) **EP 2 677 251 B1**

(12) **EUROPEAN PATENT SPECIFICATION**

(45) Date of publication and mention
of the grant of the patent:
**13.01.2016 Bulletin 2016/02**

(21) Application number: **11858787.2**

(22) Date of filing: **14.02.2011**

(51) Int Cl.:
***F24D 19/10*** *(2006.01)*

(86) International application number:
**PCT/JP2011/052984**

(87) International publication number:
**WO 2012/111063 (23.08.2012 Gazette 2012/34)**

(54) **REFRIGERATION CYCLE DEVICE AND REFRIGERATION CYCLE CONTROL METHOD**

KÄLTEKREISLAUFVORRICHTUNG UND KÄLTEKREISLAUFSTEUERVERFAHREN

DISPOSITIF À CYCLE DE RÉFRIGÉRATION ET PROCÉDÉ DE COMMANDE DE CYCLE DE RÉFRIGÉRATION

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**25.12.2013 Bulletin 2013/52**

(73) Proprietor: **Mitsubishi Electric Corporation
Tokyo 100-8310 (JP)**

(72) Inventors:
• **TAMAKI, Shogo
Tokyo 100-8310 (JP)**
• **SAITO, Makoto
Tokyo 100-8310 (JP)**

• **BABA, Masanobu
Tokyo 100-8310 (JP)**

(74) Representative: **Hopkin, Tobias J.B.
J A Kemp
14 South Square
Gray's Inn
London
WC1R 5JJ (GB)**

(56) References cited:
**JP-A- 2003 185 253    JP-A- 2003 222 396
JP-A- 2006 052 934    JP-A- 2010 243 111
JP-B2- 3 855 985**

## Description

The present invention relates to a combined air-conditioning and hot water supply system that can execute an air-conditioning operation (cooling operation or heating operation) and a hot water supply operation simultaneously. More specifically, the present invention relates to a combined air-conditioning and hot water supply system that computes the minimum required hot water supply capacity by using information on the heat consumed by a user in the past, and performs operation in accordance with an air conditioning load and the computed hot water supply capacity when the combined air-conditioning and hot water supply system is in hot water supply operation or combined air-conditioning and hot water supply operation.

Background Art

In related art, there are heat pump systems adapted for hot water supply that are equipped with a refrigerant circuit formed by connecting a hot water supply unit (hot water supply device) to a heat source unit (outdoor unit) by pipes to thereby enable a hot water supply operation. For hot water supply systems, various attempts have been made in related art to increase energy saving performance (see, for example, Patent Literatures 1 to 4).

There are also combined air-conditioning and hot water supply systems that are equipped with a refrigerant circuit formed by connecting a use unit (indoor unit) by pipes in addition to a hot water supply unit, thereby enabling simultaneous execution of an air-conditioning operation and a hot water supply operation. Such systems allow waste heat generated in cooling to be used as hot water supply operation. For such systems as well, attempts have been made to increase energy saving performance in hot water supply operation (see, for example, Patent Literature 5).

   Patent Literature 1: Japanese Unexamined Patent Application Publication No. 2007-147246
   Patent Literature 2: Japanese Patent No. 3855985
   Patent Literature 3: Japanese Unexamined Patent Application Publication No. 2004-340532
   Patent Literature 4: Japanese Unexamined Patent Application Publication No. 2003-139391
   Patent Literature 5: Japanese Unexamined Patent Application Publication No. 2007-218463

The hot water supply device of a hot water storage tank type described in Patent Literature 1 achieves improved energy saving performance by boiling up water in accordance with the heat usage condition. Specifically, a day is divided into a plurality of time slots, and a boiling operation is controlled in accordance with the required heat calculated on the basis of the actual past heat usage in each divided time slot. In this way, the time from storage of heat in the hot water storage tank to its use can be shortened, and heat rejection can be reduced, thereby improving energy saving performance. However, the method of operating the hot water supply device is not controlled on the basis of the actual heat usage in the past. Consequently, in hot water supply operation, the operating frequency of the compressor becomes high, resulting in poor operation efficiency.

In the heat pump hot water supply device described in Patent Literature 2, in accordance with the life pattern in a day,
when there is a fear that hot water may run out, an operation that draws out the heating capacity of the heat pump cycle is given priority to thereby prevent running out of hot water, and when there is no fear of running out of hot water, an operation that gives priority to the operation efficiency of the heat pump cycle is carried out. According to this known technique, during the operation that draws out heating capacity, the operating frequency of the compressor needs to be controlled to a high frequency in order to secure hot water supply capacity. Therefore, a deterioration of operation efficiency is unavoidable.

In the heat pump hot water supply device described in Patent Literature 3, hot water exit flow rate, hot water exit temperature, and hot water exit time are learned on a time-by-time basis, and the operational state is set in accordance with each corresponding time point. In addition, the frequency of the compressor is set from the inlet/outlet water temperature of the heat exchanger. This operation improves the controllability of hot water exit temperature and durability for a wide range of hot water supply loads. This known technique leads to an operational state with poor efficiency at times when the hot water supply load is high.

In the heat pump hot water supply unit described in Patent Literature 4, the boiling operation time is estimated from the amount of hot water boiled per unit time, the capacity of the hot water storage tank, and the remaining amount of hot water. Although the operation time for completing storage of heat in the hot water storage tank can be determined by using this known technique, it is not possible to determine the hot water supply operation time and the hot water supply start time that are appropriate to prevent running out of hot water at a predetermined hot water supply capacity, which makes it impossible to perform a hot water supply operation while raising operation efficiency.

In the heat pump hot water supply and cooling/heating device described in Patent Literature 5, from the amount of used hot water and the cooling operation time on the previous day, the cooling operation time on the following day is predicted and the amount of hot water to be stored by using the waste heat generated in cooling is set, and the amount of stored hot water to be boiled by hot water storage operation during the nighttime is determined, thereby reducing power consumption and preventing running out of hot water in the hot water storage tank. However, because heat is stored during the nighttime, radiation loss occurs, leading to deterioration of energy saving performance.

The present invention computes the minimum hot water supply capacity target required for avoiding running out of hot water, from the actual hot water usage by the user in the past, the heat stored in the hot water storage tank, and the hot water supply time, and performs a hot water supply operation in such a way that the hot water supply capacity becomes the target value. Accordingly, it is an object of the present invention to achieve high operation efficiency by lowering the operating frequency of the compressor in accordance with the hot water supply capacity.

A refrigeration cycle apparatus according to the present invention is a refrigeration cycle apparatus through which a refrigerant is circulated, including:

a refrigeration cycle mechanism that has a compressor whose operating frequency can be controlled, a first radiator that supplies heat by means of the refrigerant to tank water that is water stored in a hot water storage tank, a first pressure-reducing mechanism, and a first evaporator, the refrigerant circulating in an order of the compressor, the first radiator, the first pressure-reducing mechanism, and the first evaporator; and
a controller,
wherein the controller includes

a memory section that stores control period information indicating a preset control period, and is capable of storing other information,
a computing section that calculates heat supply indicating a quantity of heat that has been supplied to the tank water from the first radiator with reference to a predetermined time, on a basis of a predetermined heat supply calculation rule, stores the calculated outgoing heat supply into the memory section, and computes current heat storage in the tank water on a basis of a predetermined heat storage calculation rule, and
a controlling section that controls an operating frequency of the compressor on a basis of the control period information stored in the memory section, the outgoing heat supply stored in the memory section, and the current heat storage calculated by the computing section.

Advantageous Effects of Invention

The present invention can provide a refrigeration cycle apparatus that makes it possible to avoid running out of hot water, and perform a hot water supply operation with high operation efficiency.

[Fig. 1] Fig. 1 is a schematic diagram illustrating the refrigerant circuit configuration of a combined air-conditioning and hot water supply system 100 according to Embodiment 1.
[Fig. 2] Fig. 2 is a schematic diagram illustrating the flow of water from a hot water supply unit 304 to a tank unit 305 according to Embodiment 1.
[Fig. 3] Fig. 3 schematically illustrates a controller 110 according to Embodiment 1.
[Fig. 4] Fig. 4 illustrates the operations of a four-way valve and solenoid valves with respect to operation modes according to Embodiment 1.
[Fig. 5] Fig. 5 illustrates the heat consumption of a hot water storage tank 27 at various times in a given day, according to Embodiment 1.
[Fig. 6] Fig. 6 schematically illustrates a hot water supply operation according to Embodiment 1.
[Fig. 7] Fig. 7 illustrates a method of computing heat stored in the hot water storage tank 27 according to Embodiment 1.
[Fig. 8] Fig. 8 is a flowchart of control of a compressor in a simultaneous heating and hot water supply operation mode D according to Embodiment 1.
[Fig. 9] Fig. 9 is a flowchart of control of the compressor in a simultaneous cooling and hot water supply operation mode E according to Embodiment 1.

Embodiment 1

Hereinafter, Embodiment 1 will be described with reference to the drawings.

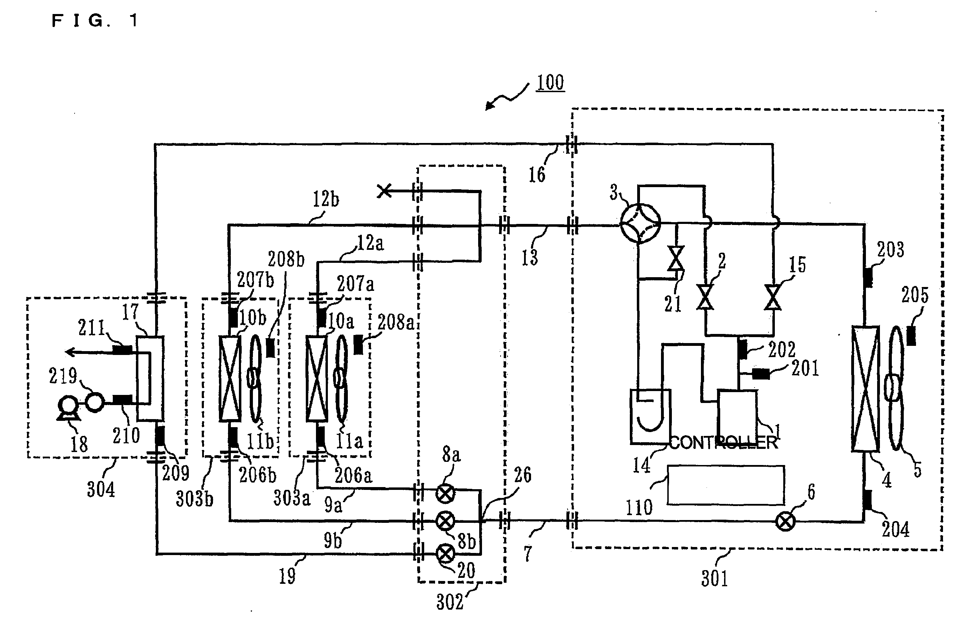

Fig. 1 is a refrigerant circuit diagram of a combined air-conditioning and hot water supply system 100 (refrigeration cycle apparatus) according to Embodiment 1. In the drawings below including Fig. 1, the relative sizes of various components may sometimes differ from the actuality. Further, in this specification, for those symbols used in mathematical expressions which appear for the first time in the specification, the units for the corresponding symbols are written inside

[ ]. Dimensionless quantities (no units) will be represented as [-].

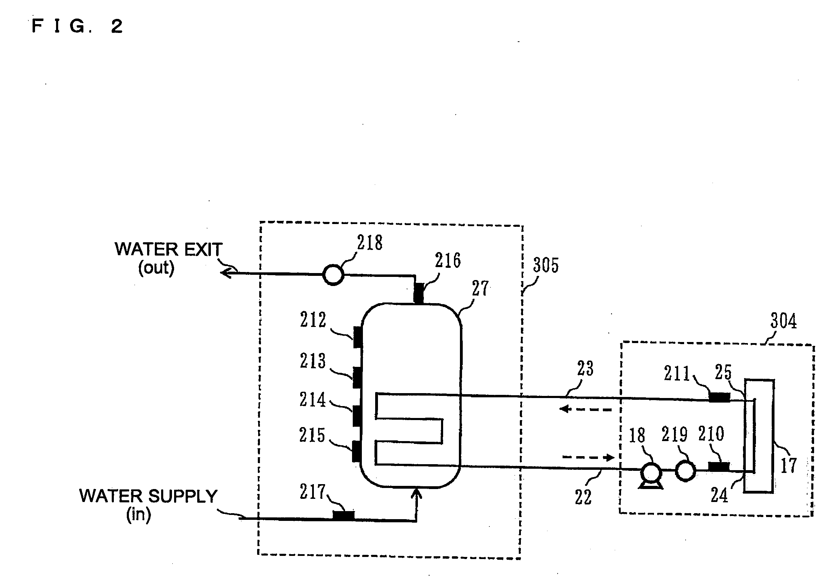

Fig. 2 is a schematic diagram illustrating the flow of water from a hot water supply unit 304 to a tank unit 305 in the combined air-conditioning and hot water supply system 100.

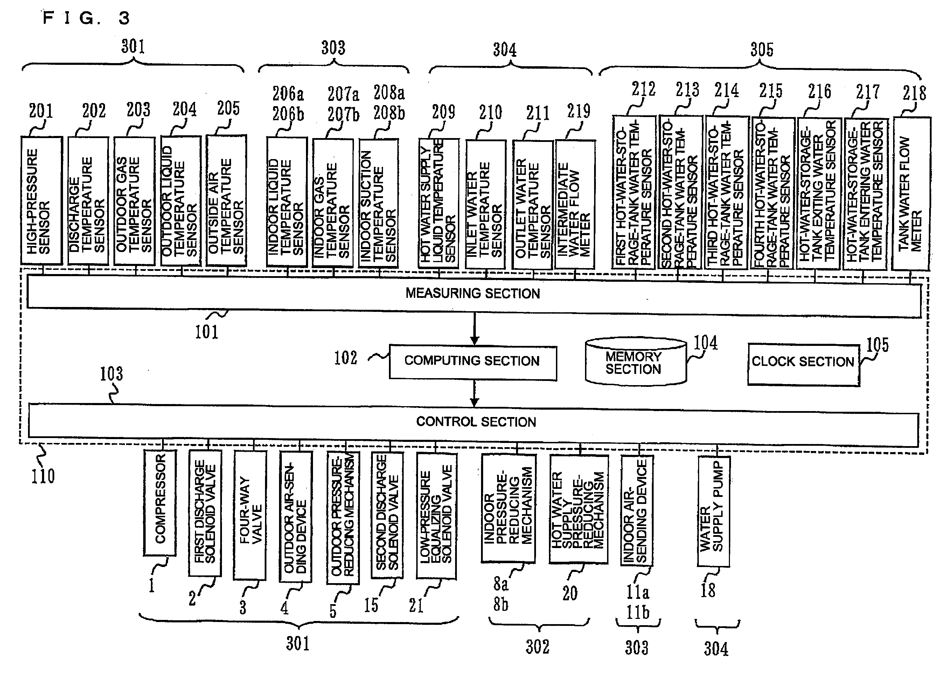

Fig. 3 schematically illustrates various sensors and a controller 110 of the combined air-conditioning and hot water supply system 100. Hereinafter, the configuration of the combined air-conditioning and hot water supply system 100 will be described with reference to Figs. 1 to 3. The combined air-conditioning and hot water supply system 100 is a three-pipe multi-system combined air-conditioning and hot water supply system that can simultaneously handle a selected cooling operation or heating operation in a use unit and a hot water supply operation in a hot water supply unit, by carrying out a vapor compression refrigeration cycle operation. In hot water supply operation, the combined air-conditioning and hot water supply system 100 lowers the frequency of a compressor to perform hot water supply with high efficiency, thereby preventing running out of hot water. Moreover, the combined air-conditioning and hot water supply system 100 can also avoid running out of hot water by lowering the frequency of the compressor in accordance with the cooling load, in the simultaneous operation of cooling and hot water supply.

<Device Configuration>

The combined air-conditioning and hot water supply system 100 has a heat source unit 301, a branch unit 302, use units 303a and 303b, the hot water supply unit 304, and the tank unit 305. The heat source unit 301 and the branch unit 302 are connected via a liquid extension pipe 7 that is a refrigerant pipe, and a gas extension pipe 13 that is a refrigerant pipe. One side of the hot water supply unit 304 is connected to the heat source unit 301 via a hot water supply gas extension pipe 16 that is a refrigerant pipe, and the other side of the hot water supply unit 304 is connected to the branch unit 302 via a hot water supply liquid pipe 19 that is a refrigerant pipe. The use units 303a and 303b and the branch unit 302 are connected via indoor gas pipes 12a and 12b that are refrigerant pipes, and indoor liquid pipes 9a and 9b that are refrigerant pipes, respectively. The tank unit 305 and the hot water supply unit 304 are connected by an upstream water pipe 22 that is a water pipe, and a downstream water pipe 23 that is a water pipe. The upstream water pipe 22 and the downstream water pipe 23 form a water flow path that is a flow path for water that enters a plate water-heat exchanger 17 from a hot water storage tank 27, passes through the plate water-heat exchanger 17, and returns to the hot water storage tank 27.

While Embodiment 1 is directed to a case where a single heat source unit, two use units, a single hot water supply unit, and a single tank unit are connected, the present invention is not limited to this case. The numbers of these components may be more than or equal to, or less than or equal to those illustrated in the drawings. The refrigerant used in the combined air-conditioning and hot water supply system 100 is R410A. The refrigerant used in the combined air-conditioning and hot water supply system 100 is not limited to this but may be, for example, a hydrofluorocarbon (HFC) refrigerant such as R407C or R404A, a hydrochlorofluorocarbon (HCFC) refrigerant such as R22 or R134a, or a refrigerant that operates at a critical pressure or more such as $CO_2$ refrigerant.

The combined air-conditioning and hot water supply system 100 includes a controller 110 as illustrated in Fig. 1. The controller 110 includes a measuring section 101, a computing section 102, a controlling section 103, a memory section 104, and a clock section 105. Various controls described below are all executed by the controller 110. While the controller 110 is arranged in the heat source unit 301 in Fig. 1, this is merely an example. The location where the controller 110 is arranged is not limited.

<Operation Modes of Heat Source Unit 301>

Operation modes that can be executed by the combined air-conditioning and hot water supply system 100 will be briefly described. In the combined air-conditioning and hot water supply system 100, the operation mode of the heat source unit 301 is determined in accordance with the hot water supply request on the hot water supply unit 304 being connected, and the presence/absence of a cooling load or heating load on the use units 303a and 303b. The combined air-conditioning and hot water supply system 100 is capable of executing five operation modes described below.

The five operation modes are a cooling operation mode A, a heating operation mode B, a hot water supply operation mode C, a simultaneous heating and hot water supply operation mode D, and a simultaneous cooling and hot water supply operation mode E.

(1) The cooling operation mode A is an operation mode of the heat source unit 301 when there is no hot water supply request signal (also referred to as hot water supply request) and the use units 303a and 303b execute a cooling operation.

(2) The heating operation mode B is an operation mode of the heat source unit 301 when there is no hot water supply request signal and the use units 303a and 303b execute a heating operation.

(3) The hot water supply operation mode C is an operation mode of the heat source unit 301 when there is no air conditioning load and the hot water supply unit 304 executes a hot water supply operation.

(4) The simultaneous heating and hot water supply operation mode D is an operation mode of the heat source unit 301 when executing a simultaneous operation of a heating operation by the use units 303a and 303b and a hot water supply operation by the hot water supply unit 304.

(5) The simultaneous cooling and hot water supply operation mode E is an operation mode of the heat source unit 301 when executing a simultaneous operation of a cooling operation by the use units 303a and 303b and a hot water supply operation by the hot water supply unit 304.

<Use Units 303a and 303b>

The use units 303a and 303b are connected to the heat source unit 301 via the branch unit 302. The use units 303a and 303b are installed in a location that allows the use units 303a and 303b to blow conditioned air to an air-conditioned area (for example, concealed or suspended on the ceiling inside a building, or hung on the wall surface). The use units 303a and 303b are connected to the heat source unit 301 via the branch unit 302, the liquid extension pipe 7, and the gas extension pipe 13, and constitute a part of the refrigerant circuit.

Each of the use units 303a and 303b includes an indoor-side refrigerant circuit that constitutes a part of the refrigerant circuit. This indoor-side refrigerant circuit is configured by indoor heat exchangers 10a and 10b each serving as a use-side heat exchanger. In addition, the use units 303a and 303b are provided with indoor air-sending devices 11a and 11b for supplying conditioned air that has exchanged heat with the refrigerant in the indoor heat exchangers 10a and 10b, respectively, to an air-conditioned area such as an indoor area.

Each of the indoor heat exchangers 10a and 10b can be configured by, for example, a cross-fin type fin-and-tube heat exchanger including a heat-transfer tube and a number of fins. Each of the indoor heat exchangers 10a and 10b may be also configured by a micro-channel heat exchanger, a shell-and-tube heat exchanger, a heat-pipe heat exchanger, or a double-pipe heat exchanger. When the operation mode executed by the use units 303a and 303b is the cooling operation mode A, the indoor heat exchangers 10a and 10b each function as an evaporator for the refrigerant to cool the air in the air-conditioned area, and when the operation mode executed by the use units 303a and 303b is the heating operation mode B, the indoor heat exchangers 10a and 10b each function as a condenser (or a radiator) for the refrigerant to heat the air in the air-conditioned area.

The indoor air-sending devices 11a and 11b respectively have the function of causing indoor air to be sucked into the use units 303a and 303b, and after making the indoor air exchange heat with the refrigerant in the indoor heat exchangers 10a and 10b, supplying the air to the air-conditioned area as conditioned air. That is, in the use units 303a and 303b, heat can be exchanged between the indoor air introduced by the indoor air-sending devices 11a and 11b, and the refrigerant flowing through the indoor heat exchangers 10a and 10b, respectively. The indoor air-sending devices 11a and 11b are configured to be able to vary the flow rates of conditioned air supplied to the indoor heat exchangers 10a and 10b, respectively. For example, the indoor air-sending devices 11a and 11b each include a fan such as a centrifugal fan or a multi-blade fan, and a motor that drives this fan, for example, a DC fan motor.

(Sensors)

Further, the use units 303a and 303b are respectively provided with various sensors described below:

(1) indoor liquid temperature sensors 206a and 206b that are provided on the liquid side of the indoor heat exchangers 10a and 10b (the liquid side of the indoor heat exchangers 10a and 10b when acting as a radiator), and detect the temperature of a liquid refrigerant;

(2) indoor gas temperature sensors 207a and 207b that are provided on the gas side of the indoor heat exchangers 10a and 10b (the gas side of the indoor heat exchangers 10a and 10b when acting as a radiator), and detect the temperature of a gas refrigerant; and

(3) indoor suction temperature sensors 208a and 208b that are provided on the suction port side of the indoor air of the use units 303a and 303b, and detect the temperature of the indoor air entering the unit.

As illustrated in Fig. 3, the operations of the indoor air-sending devices 11a and 11b are controlled by the controlling section 103 that functions as normal operation control means for performing normal operation of the use units 303a and 303b including the cooling operation and the heating operation.

<Hot Water Supply Unit 304>

The hot water supply unit 304 is connected to the heat source unit 301 via the branch unit 302. As illustrated in Fig. 2, the hot water supply unit 304 has the function of supplying hot water to the tank unit 305 that is installed outside a building, for example, and heating and boiling the water in the hot water storage tank 27. The plate water-heat exchanger 17 of the hot water supply unit 304 includes a connecting part 24 (water inflow pipe connecting part) to which the upstream water pipe 22 (water inflow pipe) connects, and a connecting part 25 (water outflow pipe connecting part) to which the downstream water pipe 23 (water outflow pipe) connects. One side of the hot water supply unit 304 is connected to the heat source unit 301 via the hot water supply gas extension pipe 16, and the other side of the hot water supply unit 304 is connected to the branch unit 302 via the hot water supply liquid pipe 19. The hot water supply unit 304 constitutes a part of the refrigerant circuit in the combined air-conditioning and hot water supply system 100.

The hot water supply unit 304 includes a hot water supply-side refrigerant circuit that constitutes a part of the refrigerant circuit. This hot water supply-side refrigerant circuit has, as its constituent function, the plate water-heat exchanger 17 serving as a hot water supply-side heat exchanger. In addition, the hot water supply unit 304 is provided with a water supply pump 18 for sending water for supplying hot water that has exchanged heat with the refrigerant in the plate water-heat exchanger 17 to the tank unit 305 or the like.

In the hot water supply operation mode C executed by the hot water supply unit 304, the plate water-heat exchanger 17 functions as a condenser for the refrigerant, and heats the water supplied by the water supply pump 18. The water supply pump 18 has the function of supplying water into the hot water supply unit 304, causing the water to exchange heat in the plate water-heat exchanger 17 and turn into hot water, and thereafter supplying the hot water into the tank unit 305 for heat exchange with the water in the hot water storage tank 27 (tank water). That is, in the hot water supply unit 304, heat can be exchanged between the water supplied from the water supply pump 18 and the refrigerant flowing through the plate water-heat exchanger 17, and also heat can be exchanged between the water supplied from the water supply pump 18 and the water in the hot water storage tank 27. Moreover, the hot water supply unit 304 is configured to be able to vary the flow rate of water supplied to the plate water-heat exchanger 17.

(Sensors)

The hot water supply unit 304 is also provided with various sensors described below:

(1) a hot water supply liquid temperature sensor 209 that is provided on the liquid side of the plate water-heat exchanger 17, and detects the temperature of a liquid refrigerant;
(2) an inlet water temperature sensor 210 (inlet temperature sensor) that is provided in the water inflow part, and detects the inlet temperature of water entering the hot water supply unit 304;
(3) an outlet water temperature sensor 211 (outlet temperature sensor) that is provided in the water outflow part, and detects the outlet temperature of water exiting the hot water supply unit 304; and
(4) an intermediate water flow meter 219 (Fig. 2) that is provided in the water inflow part, and detects the volume flow rate of water entering the hot water supply unit 304.

As illustrated in Fig. 3, the operation of the water supply pump 18 is controlled by the controlling section 103 that functions as normal operation control means for performing normal operation of the hot water supply unit 304 including the hot water supply operation mode.

<Tank Unit 305>

The tank unit 305 is installed outside a building, for example, and has the function of storing hot water boiled by the hot water supply unit 304. As illustrated in Fig. 2, the tank unit 305 has the hot water storage tank 27 for storing hot water. One side of the tank unit 305 is connected to the hot water supply unit 304 via the upstream water pipe 22, and the other side of the tank unit 305 is connected to the hot water supply unit 304 via the downstream water pipe 23. The tank unit 305 constitutes a part of a water circuit in the combined air-conditioning and hot water supply system 100. The hot water storage tank 27 is of an always-full type. As the user consumes water, hot water exits from the top of the tank, and city water is supplied from the bottom of the tank in accordance with the amount of the consumed hot water.

The water fed by the water supply pump 18 in the hot water supply unit 304 is heated by the refrigerant in the plate water-heat exchanger 17 and turns into hot water, and enters the hot water storage tank 27 via the downstream water pipe 23. The hot water exchanges heat with the water in the hot water storage tank 27 as intermediate water and turns into cold water, without mixing with the water in the hot water storage tank 27. Thereafter, the cold water exits the hot water storage tank 27, and enters the hot water supply unit 304 again via the upstream water pipe 22. After being fed again by the water supply pump 18, the cold water turns into hot water in the plate water-heat exchanger 17. Through this process, hot water is boiled in the tank unit 305.

The method of heating the water in the tank unit 305 is not limited to the heat exchange method using intermediate water as in Embodiment 1. Alternatively, a heating method may be employed in which the water in the hot water storage tank 27 is directly passed through a pipe so as to exchange heat and turn into hot water in the plate water-heat exchanger 17, and returned to the hot water storage tank 27 again.

(Sensors)

The tank unit 305 is also provided with various sensors described below:

(1) a first hot-water-storage-tank water temperature sensor 212 that is provided on a side surface of the hot water storage tank 27, and detects the hot water temperature of an upper side surface of the hot water storage tank 27;
(2) a second hot-water-storage-tank water temperature sensor 213 that is provided on a side surface of the hot water storage tank 27, and detects the hot water temperature of the side surface of a portion of the hot water storage tank 27 located below the first hot-water-storage-tank water temperature sensor 212;
(3) a third hot-water-storage-tank water temperature sensor 214 that is provided on a side surface of the hot water storage tank 27, and detects the hot water temperature of the side surface of a portion of the hot water storage tank 27 located below the second hot-water-storage-tank water temperature sensor 213;
(4) a fourth hot-water-storage-tank water temperature sensor 215 that is provided on a side surface of the hot water storage tank 27, and detects the hot water temperature of the side surface of a portion of the hot water storage tank 27 located below the third hot-water-storage-tank water temperature sensor 214;
(5) a hot-water-storage-tank exiting water temperature sensor 216 that is provided in the water exit part of the hot water storage tank 27, and detects the temperature of water exiting the hot water storage tank 27;
(6) a hot-water-storage-tank entering water temperature sensor 217 that is provided in the water supply part of the hot water storage tank 27, and detects the temperature of water entering the hot water storage tank 27; and
(7) a tank water flow meter 218 that is provided in the water exit part of the hot water storage tank 27, and detects the flow rate of water exiting the hot water storage tank 27.

<Heat Source Unit 301>

The heat source unit 301 is installed outside a building, for example. The heat source unit 301 is connected to the use units 303a and 303b via the liquid extension pipe 7, the gas extension pipe 13, and the branch unit 302. The heat source unit 301 is also connected to the hot water supply unit 304 via the hot water supply gas extension pipe 16, the liquid extension pipe 7, and the branch unit 302. The heat source unit 301 constitutes a part of the refrigerant circuit in the combined air-conditioning and hot water supply system 100.
The heat source unit 301 includes an outdoor-side refrigerant circuit that constitutes a part of the refrigerant circuit. This outdoor-side refrigerant circuit has, as its constituent devices, a compressor 1 that compresses the refrigerant, a four-way valve 3 for switching the direction of flow of the refrigerant in accordance with the outdoor operation mode, three solenoid valves (a first discharge solenoid valve 2, a second discharge solenoid valve 15, and a low-pressure equalizing solenoid valve 21), an outdoor heat exchanger 4 as a heat source-side heat exchanger, and an accumulator 14 for storing excess refrigerant. The heat source unit 301 also includes an outdoor air-sending device 5 for supplying air to the outdoor heat exchanger 4, and an outdoor pressure-reducing mechanism 6 serving as a heat source-side pressure-reducing mechanism for controlling the flow rate of the refrigerant to be distributed.
The compressor 1 sucks a refrigerant, and compresses the refrigerant into a high temperature/high pressure state. The compressor 1 that is equipped in Embodiment 1 is capable of varying operation capacity, and is configured by, for example, a positive displacement compressor that is driven by a motor (not illustrated) controlled by an inverter. While Embodiment 1 is directed to a case where there is only one compressor 1, the present invention is not limited to this. Depending on the number of use units 303a and 303b and hot water supply units 304 that are connected, or the like, two or more compressors 1 may be connected in parallel. Further, the discharge-side pipe connected to the compressor 1 divides into branches at a point, one of which is connected to the gas extension pipe 13 via the four-way valve 2, and the other is connected to the hot water supply gas extension pipe 16 via the second discharge solenoid valve 15.
The four-way valve 3, the first discharge solenoid valve 2, the second discharge solenoid valve 15, and the low-pressure equalizing solenoid valve 21 each function as a flow switching device that switches the direction of flow of the refrigerant in accordance with the operation mode of the heat source unit 301.

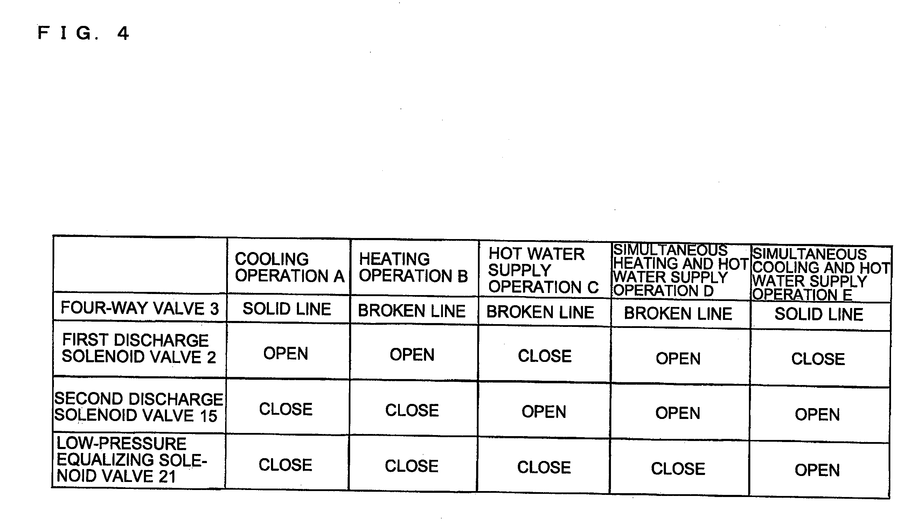

Fig. 4 illustrates details of the operations of the four-way valve and solenoid valves with respect to operation modes. The "solid line" and "broken line" indicated in Fig. 4 mean the "solid line" and "broken line" representing the switching states of the four-way valve 3 illustrated in Fig. 1, respectively.
The four-way valve 3 is switched into the state of "solid line" in the cooling operation mode A and the simultaneous cooling and hot water supply operation mode E. That is, in the cooling operation mode A and the simultaneous cooling and hot water supply operation mode E, the four-way valve 3 is switched so as to connect the suction side of the compressor 1 and the gas side of the indoor heat exchangers 10a and 10b, in order to make each of the indoor heat exchangers 10a and 10b function as an evaporator for the refrigerant that is compressed in the compressor 1. In the heating operation mode B, the hot water supply operation mode C, and the simultaneous heating and hot water supply operation mode D, the four-way valve 3 is switched into the state of "broken line". That is, in the heating operation mode B, the hot water supply operation mode C, and the simultaneous heating and hot water supply operation mode D, the four-way valve 3 is switched so as to connect the suction side of the compressor 1 and the gas side of the outdoor heat exchanger 4, in order to make the outdoor heat exchanger 4 function as an evaporator for the refrigerant that is compressed in the compressor 1.

The first discharge solenoid valve 2 is switched so as to be "open" in the cooling operation mode A, the heating operation mode B, and the simultaneous cooling and hot water supply operation mode E. That is, in the cooling operation mode A, the first discharge solenoid valve 2 is switched so as to connect the discharge side of the compressor 1 and the gas side of the outdoor heat exchanger 4, in order to make the outdoor heat exchanger 4 function as a condenser for the refrigerant that is compressed in the compressor 1, and in the heating operation mode B and the simultaneous heating and hot water supply operation mode D, the first discharge solenoid valve 2 is switched so as to connect the discharge side of the compressor 1 and the gas side of the indoor heat exchangers 10a and 10b, in order to make each of the indoor heat exchangers 10a and 10b function as a condenser for the refrigerant that is compressed in the compressor 1. In addition, in the hot water supply operation mode C and the simultaneous heating and hot water supply operation mode D, the first discharge solenoid valve 2 is switched so as to be "closed".

The second discharge solenoid valve 15 is switched so as to be "open" in the hot water supply operation mode C, the simultaneous heating and hot water supply operation mode D, and the simultaneous cooling and hot water supply operation mode E. That is, in the hot water supply operation mode C, the simultaneous heating and hot water supply operation mode D, and the simultaneous cooling and hot water supply operation mode E, the second discharge solenoid valve 15 connects the discharge side of the compressor 1 and the gas side of the plate water-heat exchanger 17, in order to make the plate water-heat exchanger 17 function as a condenser for the refrigerant that is compressed in the compressor 1. Moreover, in the cooling operation mode A and the heating operation mode B, the second discharge solenoid valve 15 is switched so as to be "closed".

The low-pressure equalizing solenoid valve 21 is switched so as to be "open" in the simultaneous cooling and hot water supply operation mode E. That is, in the simultaneous cooling and hot water supply operation mode E, the low-pressure equalizing solenoid valve 21 connects the suction side of the compressor 1 and the gas side of the outdoor heat exchanger 4, in order to turn the outdoor heat exchanger 4 into a low pressure state. In addition, in the cooling operation mode A, the heating operation mode B, the hot water supply operation mode C, and the simultaneous heating and hot water supply operation mode D, the low-pressure equalizing solenoid valve 21 is switched so as to be "closed".

The gas side of the outdoor heat exchanger 4 is connected to the four-way valve 3, and the liquid side of the outdoor heat exchanger 4 is connected to the outdoor pressure-reducing mechanism 6. The outdoor heat exchanger 4 can be configured by, for example, a cross-fin type fin-and-tube heat exchanger including a heat-transfer tube and a number of fins. Alternatively, the outdoor heat exchanger 4 may be configured as a micro-channel heat exchanger, a shell-and-tube heat exchanger, a heat-pipe heat exchanger, or a double-pipe heat exchanger. The outdoor heat exchanger 4 functions as a condenser for the refrigerant to cool the refrigerant in the cooling operation mode A, and functions as an evaporator for the refrigerant to heat the refrigerant in the heating operation mode B, the hot water supply operation mode C, the simultaneous heating and hot water supply operation mode D, and the simultaneous cooling and hot water supply operation mode E.

The outdoor air-sending device 5 has the function of sucking the outdoor air into the heat source unit 301, causing the outdoor air to exchange heat in the outdoor heat exchanger 4, and thereafter emitting the air outdoors. That is, in the heat source unit 301, heat can be exchanged between the outside air introduced by the outdoor air-sending device 5, and the refrigerant flowing through the outdoor heat exchanger 4. The outdoor air-sending device 5 is configured to be able to vary the flow rate of air supplied to the outdoor heat exchanger 4. The outdoor air-sending device 5 includes a fan such as a propeller fan, and a motor that drives this fan, for example, a DC fan motor.

The accumulator 14 is provided on the suction side of the compressor 1. The accumulator 14 has the function of storing a liquid refrigerant to prevent liquid backflow to the compressor 1 when an abnormality occurs in the combined air-conditioning and hot water supply system 100 or during the transient response of the operational state caused by a change in operation control.

(Sensors)

The heat source unit 301 is also provided with various sensors described below:

(1) a high-pressure sensor 201 that is provided on the discharge side of the compressor 1, and detects high-pressure side pressure;
(2) a discharge temperature sensor 202 that is provided on the discharge side of the compressor 1, and detects discharge temperature;

(3) an outdoor gas temperature sensor 203 that is provided on the gas side of the outdoor heat exchanger 4, and detects gas refrigerant temperature;

(4) an outdoor liquid temperature sensor 204 that is provided on the liquid side of the outdoor heat exchanger 4, and detects the temperature of a liquid refrigerant; and

(5) an outside air temperature sensor 205 that is provided on the suction port side of the outside air of the heat source unit 301, and detects the temperature of the outside air entering the unit.

The operations of the compressor 1, first discharge solenoid valve 2, four-way valve 3, outdoor air-sending device 5, outdoor pressure-reducing mechanism 6, second discharge solenoid valve 15, and low-pressure equalizing solenoid valve 21 are controlled by the controlling section 103 that functions as normal operation control means for performing normal operation including the cooling operation mode A, the heating operation mode B, the hot water supply operation mode C, the simultaneous heating and hot water supply operation mode D, and the simultaneous cooling and hot water supply operation mode E.

<Branch Unit 302>

The branch unit 302 is installed inside a building, for example. The branch unit 302 is connected to the heat source unit 301 via the liquid extension pipe 7 and the gas extension pipe 13, is connected to the use units 303a and 303b via the indoor liquid pipes 9a and 9b and the indoor gas pipes 12a and 12b, respectively, and is connected to the hot water supply unit 304 via the hot water supply liquid pipe 19. The branch unit 302 constitutes a part of the refrigerant circuit in the combined air-conditioning and hot water supply system 100. The branch unit 302 has the function of controlling the flow of the refrigerant in accordance with the operation that is being required for each of the use units 303a and 303b and the hot water supply unit 304.

The branch unit 302 includes a branch refrigerant circuit that constitutes a part of the refrigerant circuit. This branch refrigerant circuit has, as its constituent devices, indoor pressure-reducing mechanisms 8a and 8b each serving as use-side pressure-reducing mechanism for controlling the flow rate of the refrigerant to be distributed, and a hot water supply pressure-reducing mechanism 20 for controlling the flow rate of the refrigerant to be distributed.

The indoor pressure-reducing mechanisms 8a and 8b are provided in the indoor liquid pipes 9a and 9b, respectively. The hot water supply pressure-reducing mechanism 20 is provided in the hot water supply liquid pipe 19 within the branch unit 302. The indoor pressure-reducing mechanisms 8a and 8b each function as a pressure reducing valve or an expansion valve. In the cooling operation mode A, the indoor pressure-reducing mechanisms 8a and 8b reduce the pressure of the refrigerant flowing through the liquid extension pipe 7, and in the simultaneous cooling and hot water supply operation mode E, the indoor pressure-reducing mechanisms 8a and 8b reduce the pressure of the refrigerant flowing through the hot water supply pressure-reducing mechanism 20, thereby causing the refrigerant to expand. In the heating operation mode B and the simultaneous heating and hot water supply operation mode D, the indoor pressure-reducing mechanisms 8a and 8b reduce the pressures of refrigerant flowing through the indoor liquid pipes 9a and 9b, respectively, thereby causing the refrigerant to expand. The hot water supply pressure-reducing mechanism 20 functions as a pressure reducing valve or an expansion valve. In the hot water supply operation mode C and the simultaneous heating and hot water supply operation mode D, the hot water supply pressure-reducing mechanism 20 reduces the pressure of the refrigerant flowing through the hot water supply liquid pipe 19 to thereby cause the refrigerant to expand. The indoor pressure-reducing mechanisms 8a and 8b and the hot water supply pressure-reducing mechanism 20 are each preferably configured so that its opening degree can be variably controlled, for example, precision flow control means formed by an electronic expansion valve, or inexpensive refrigerant flow control means such as a capillary.

As illustrated in Fig. 3, the operation of the hot water supply pressure-reducing mechanism 20 is controlled by the controlling section 103 of the controller 110 that functions as normal operation control means for performing normal operation of the hot water supply unit 304 including the hot water supply operation (see Fig. 3). In addition, the operations of the indoor pressure-reducing mechanisms 8a and 8b are controlled by the controlling section 103 that functions as normal operation control means for performing normal operation of the use units 303a and 303b including the cooling operation and the heating operation.

As illustrated in Fig. 3, various quantities detected by various temperature sensors and pressure sensors are inputted to the measuring section 101, and processed in the computing section 102. Then, on the basis of the processing results in the computing section 102, the controlling section 103 controls the compressor 1, the first discharge solenoid valve 2, the four-way valve 3, the outdoor air-sending device 5, the outdoor pressure-reducing mechanism 6, the indoor pressure-reducing mechanisms 8a and 8b, the indoor air-sending devices 11 and 11 b, the second discharge solenoid valve 15, the water supply pump 18, and the hot water supply pressure-reducing mechanism 20. That is, the operation of the combined air-conditioning and hot water supply system 100 is controlled in an integrated manner by the controller 110 including the measuring section 101, the computing section 102, and the controlling section 103. The controller 110 can be configured by a microcomputer. Computational expressions in the following description of Embodiment 1 are computed by the computing section 102, and the controlling section 103 controls various devices such as the compressor 1 in accordance with the computation results. Data used in the computing section 102, computation results, and the like are stored in the memory section 104. The clock section 105 outputs the current time.

Specifically, on the basis of the operation mode inputted via a remote control (for example, a cooling request signal that requests the cooling operation of the use units 303a or 303b), a hot water supply request signal described later, designation of a set temperature or the like, and information detected by various sensors, the controlling section 103 executes various operation modes by controlling:

the driving frequency of the compressor 1;
switching of the first discharge solenoid valve 2;
switching of the four-way valve 3;
the rotation speed (including ON/OFF) of the outdoor air-sending device 5;
the opening degree of the outdoor pressure-reducing mechanism 6;
the opening degrees of the indoor pressure-reducing mechanisms 8a and 8b;
the rotation speeds (including ON/OFF) of the indoor air-sending devices 11a and 11b;
switching of the second discharge solenoid valve 15;
the rotation speed (including ON/OFF) of the water supply pump 18;
the opening degree of the hot water supply pressure-reducing mechanism 20; and
switching of the low-pressure equalizing solenoid valve 21.

The measuring section 101, the computing section 102, the controlling section 103, the memory section 104, and the clock section 105 may be provided integrally, or may be provided separately. Alternatively, the measuring section 101, the computing section 102, the controlling section 103, the memory section 104, and the clock section 105 may be provided in one of the units. Further, the measuring section 101, the computing section 102, the controlling section 103, the memory section 104, and the clock section 105 may be provided in each unit.

<Operation Modes>

The combined air-conditioning and hot water supply system 100 executes the cooling operation mode A, the heating operation mode B, the hot water supply operation mode C, the simultaneous heating and hot water supply operation mode D, and the simultaneous cooling and hot water supply operation mode E by controlling various devices equipped to the heat source unit 301, the branch unit 302, the use units 303a and 303b, and the hot water supply unit 304 in accordance with an air conditioning load required for each of the use units 303a and 303b, and a hot water supply request made to the hot water supply unit 304.

<Operation>

Specific refrigerant flow methods and normal control methods for individual devices in the cooling operation mode A, the heating operation mode B, the hot water supply operation mode C, the simultaneous heating and hot water supply operation mode D, and the simultaneous cooling and hot water supply operation mode E executed by the combined air-conditioning and hot water supply system 100 will be described. The operations of the four-way valve 3 in individual operation modes are as illustrated in Fig. 4.

[Cooling Operation Mode A]

In the cooling operation mode A, the four-way valve 3 is in the state indicated by the solid line, that is, a state in which the discharge side of the compressor 1 is connected to the gas side of the outdoor heat exchanger 4. Further, the first discharge solenoid valve 2 is open, the second discharge solenoid valve 15 is closed, and the low-pressure equalizing solenoid valve 21 is closed. Further, the opening degree of the hot water supply pressure-reducing mechanism 20 is at the minimum (fully closed).

In this state of the refrigerant circuit, the compressor 1, the outdoor air-sending device 5, and the indoor air-sending devices 11a and 11b are activated. Then, a low-pressure gas refrigerant is sucked into the compressor 1, where the refrigerant is compressed into a high temperature/high pressure gas refrigerant. Thereafter, the high temperature/high pressure gas refrigerant enters the outdoor heat exchanger 4 via the first discharge solenoid valve 2 and the four-way valve 3, where the gas refrigerant is condensed by exchanging heat with the outdoor air supplied by the outdoor air-sending device 5, and turns into a high-pressure liquid refrigerant. After exiting the outdoor heat exchanger 4, the refrigerant flows to the outdoor pressure-reducing mechanism 6, where its pressure is reduced. Thereafter, the refrigerant enters the branch unit 302 via the liquid extension pipe 7. At this time, the outdoor pressure-reducing mechanism 6 is being controlled to the maximum opening degree (fully open). The refrigerant that has entered the branch unit 302 is reduced in pressure in the indoor pressure-reducing mechanisms 8a and 8b, and turns into a two-phase gas-liquid refrigerant at low pressure. Thereafter, the refrigerant exits the branch unit 302, and enters the use units 303a and 303b via the indoor liquid pipes 9a and 9b.

The refrigerant that has entered the use units 303a and 303b enters the indoor heat exchangers 10a and 10b, and is evaporated and turns into a low-pressure gas refrigerant by exchanging heat with the indoor air supplied by the indoor air-sending devices 11a and 11 b. Here, each of the indoor pressure-reducing mechanisms 8a and 8b is controlled so that there is no temperature difference (cooled indoor temperature difference) in the use unit 303a or 303b, which is calculated by subtracting a set temperature from the indoor suction temperature detected by the indoor suction temperature sensor 208a or 208b. Accordingly, refrigerant flows through each of the indoor heat exchangers 10a and 10b at a flow rate suited to the cooling load required for the air-conditioned space where the use unit 303a or 303b is installed.

The refrigerant that has exited the indoor heat exchangers 10a and 10b exits the use units 303a and 303b, and flows to the gas extension pipe 13 after passing through the indoor gas pipes 12a and 12b and the branch unit 302. The refrigerant then passes through the accumulator 14 via the four-way valve 3, and is sucked into the compressor 1 again.

The operating frequency of the compressor 1 is controlled by the controlling section 103 so that the evaporating temperature becomes a predetermined value in accordance with the maximum cooled indoor temperature difference. Here, the evaporating temperature is the temperature detected by the indoor liquid temperature sensor 206a or 206b. The maximum cooled indoor temperature difference is the temperature difference in either one of the use units 303a and 303b in which the temperature difference (cooled indoor temperature difference) calculated by subtracting a set temperature from the indoor suction temperature detected by the indoor suction temperature sensor 208a or 208b is maximum. Specifically, the operating frequency of the compressor 1 is controlled by the controlling section 103 so that the evaporating temperature becomes a predetermined value in accordance with the maximum cooled indoor temperature difference. In addition, the air flow of the outdoor air-sending device 5 is controlled by the controlling section 103 so that the condensing temperature becomes a predetermined value in accordance with the outside air temperature detected by the outside air temperature sensor 205. Here, the condensing temperature is the saturation temperature computed from the pressure detected by the high-pressure sensor 201.

[Heating Operation Mode B]

In the heating operation mode B, the four-way valve 3 is in the state indicated by the broken line, that is, a state in which the discharge side of the compressor 1 is connected to the gas side of the indoor heat exchangers 10a and 10b, and the suction side of the compressor 1 is connected to the gas side of the outdoor heat exchanger 4. In addition, the first discharge solenoid valve 2 is open, the second discharge solenoid valve 15 is closed, and the low-pressure equalizing solenoid valve 21 is closed. Further, the hot water supply pressure-reducing mechanism 20 is fully closed.

In this state of the refrigerant circuit, the compressor 1, the outdoor air-sending device 5, the indoor air-sending devices 11a and 11 b, and the water supply pump 18 are activated. Then, a low-pressure gas refrigerant is sucked into the compressor 1, where the refrigerant is compressed into a high temperature/high pressure gas refrigerant. Thereafter, the high temperature/high pressure gas refrigerant flows through the first discharge solenoid valve 2 and the four-way valve 3.

The refrigerant that has entered the four-way valve 3 exits the heat source unit 301, and flows to the branch unit 302 via the gas extension pipe 13. Thereafter, the refrigerant enters the use units 303a and 303b via the indoor gas pipes 12a and 12b. The refrigerant that has entered the use units 303a and 303b enters the indoor heat exchangers 10a and 10b, where the refrigerant is condensed by exchanging heat with the indoor air supplied by the indoor air-sending devices 11a and 11b and turns into a high-pressure liquid refrigerant, and exits the indoor heat exchangers 10a and 10b. The refrigerant that has heated the indoor air in the indoor heat exchangers 10a and 10b exits the use units 303a and 303b, and enters the branch unit 302 via the indoor liquid pipes 9a and 9b. Then, the refrigerant is reduced in pressure by the indoor pressure-reducing mechanisms 8a and 8b, and turns into a two-phase gas-liquid or liquid-phase refrigerant. Thereafter, the refrigerant exits the branch unit 302.

Each of the indoor pressure-reducing mechanisms 8a and 8b is controlled so that there is no temperature difference (heated indoor temperature difference) in the use unit 303a or 303b, which is calculated by subtracting an indoor set temperature from the indoor suction temperature detected by the indoor suction temperature sensor 208a or 208b. Accordingly, refrigerant flows through each of the indoor heat exchangers 10a and 10b at a flow rate suited to the heating load required for the air-conditioned space where the use unit 303a or 303b is installed.

The refrigerant that has exited the branch unit 302 enters the heat source unit 301 via the liquid extension pipe 7, and after passing through the outdoor pressure-reducing mechanism 6, the refrigerant enters the outdoor heat exchanger 4. The opening degree of the outdoor pressure-reducing mechanism 6 is being controlled to the full opening.

The refrigerant that has entered the outdoor pressure-reducing mechanism 6 is evaporated by exchanging heat with the outside air supplied by the outdoor air-sending device 5, and turns into a low-pressure gas refrigerant. After exiting the outdoor heat exchanger 4, this refrigerant passes through the accumulator 14 via the four-way valve 3, and is thereafter sucked into the compressor 1 again.

The operating frequency of the compressor 1 is controlled by the controlling section 103 so that the condensing temperature becomes a predetermined value in accordance with the maximum heated indoor temperature difference. The method of calculating the condensing temperature is the same as that in the case of the cooling operation. In addition, the maximum heated indoor tempera ture difference is the temperature difference in either one of the use units 303a and 303b in which the temperature difference (heated indoor temperature difference) calculated by subtracting an indoor set temperature from the indoor suction temperature detected by the indoor suction temperature sensor 208a or 208b is maximum. Further, the air flow of the outdoor air-sending device 5 is controlled by the controlling section 103 so that the evaporating temperature becomes a predetermined value in accordance with the outside air temperature detected by the outside air temperature sensor 205. Here, the evaporating temperature is calculated from the temperature detected by the outdoor liquid temperature sensor 204.

[Hot Water Supply Operation Mode C]

In the hot water supply operation mode C, the four-way valve 3 is in the state indicated by the broken line, that is, a state in which the discharge side of the compressor 1 is connected to the gas side of the plate water-heat exchanger 17, and the suction side of the compressor 1 is connected to the gas side of the outdoor heat exchanger 4. In addition, the first discharge solenoid valve 2 is closed, the second discharge solenoid valve 15 is open, and the low-pressure equalizing solenoid valve 21 is closed. Further, the indoor pressure-reducing mechanisms 8a and 8b are fully closed.

In this state of the refrigerant circuit, the compressor 1, the outdoor air-sending device 5, the indoor air-sending devices 11a and 11 b, and the water supply pump 18 are activated. Then, a low-pressure gas refrigerant is sucked into the compressor 1, where the refrigerant is compressed into a high temperature/high pressure gas refrigerant. Thereafter, the high temperature/high pressure gas refrigerant enters the second discharge solenoid valve 15.

The refrigerant that has entered the second discharge solenoid valve 15 exits the heat source unit 301, and enters the hot water supply unit 304 via the hot water supply gas extension pipe 16. The refrigerant that has entered the hot water supply unit 304 enters the plate water-heat exchanger 17, where the refrigerant is condensed by exchanging heat with the water supplied by the water supply pump 18 and turns into a high-pressure liquid refrigerant, and exits the plate water-heat exchanger 17 (first radiator). After the refrigerant that has heated the water in the plate water-heat exchanger 17 exits the hot water supply unit 304, the refrigerant enters the branch unit 302 via the hot water supply liquid pipe 19, and is reduced in pressure by the hot water supply pressure-reducing mechanism 20 (first pressure-reducing mechanism) and turns into a two-phase gas-liquid refrigerant at low pressure. Thereafter, the refrigerant exits the branch unit 302, and enters the heat source unit 301 via the liquid extension pipe 7.

The hot water supply pressure-reducing mechanism 20 is controlled by the controlling section 103 to such an opening degree that the degree of subcooling on the liquid side of the plate water-heat exchanger 17 becomes a predetermined value. The degree of subcooling on the liquid side of the plate water-heat exchanger 17 is calculated by computing the saturation temperature (condensing temperature) from the pressure detected by the high-pressure sensor 201, and subtracting the temperature detected by the hot water supply liquid temperature sensor 209 from the saturation temperature. The hot water supply pressure-reducing mechanism 20 controls the flow rate of refrigerant flowing through the plate water-heat exchanger 17 so that the degree of subcooling of the refrigerant on the liquid side of the plate water-heat exchanger 17 becomes a predetermined value. Consequently, the high-pressure liquid refrigerant that has been condensed in the plate water-heat exchanger 17 has a predetermined degree of subcooling. In this way, in the plate water-heat exchanger 17, refrigerant flows at a flow rate suited to the hot water supply request made in accordance with the usage condition of hot water in the facility where the hot water supply unit 304 is installed.

The refrigerant that has exited the branch unit 302 enters the heat source unit 301 via the liquid extension pipe 7, and after passing through the outdoor pressure-reducing mechanism 6, the refrigerant enters the outdoor heat exchanger 4 (first evaporator). The opening degree of the outdoor pressure-reducing mechanism 6 is being controlled to the full opening. The refrigerant that has entered the outdoor heat exchanger 4 is evaporated by exchanging heat with the outside air supplied by the outdoor air-sending device 5, and turns into a low-pressure gas refrigerant. After exiting the outdoor heat exchanger 4, this refrigerant passes through the accumulator 14 via the four-way valve 3, and is thereafter sucked into the compressor 1 again.

Here, the air flow of the outdoor air-sending device 5 is controlled by the controlling section 103 so that the evaporating temperature becomes a predetermined value in accordance with the outside air temperature detected by the outside air temperature sensor 205. Here, the evaporating temperature is the temperature detected by the outdoor liquid temperature sensor 204.

In the hot water supply operation mode according to related art, the operating frequency of the compressor 1 is controlled by the controlling section 103 to a high frequency in order to avoid running out of hot water. Consequently, high hot water supply capacity can be secured, and the water temperature within the hot water storage tank 27 can be raised to a set hot water supply temperature in the shortest possible time.

However, operation efficiency deteriorates in that case. Accordingly, in order to achieve high operation efficiency while avoiding running out of hot water, the operating frequency of the compressor 1 is controlled to a low frequency by using a record of past hot water usage. The control of the operating frequency of the compressor executed on the basis of Equations (1) to (7) below will be referred to as "hot water supply operation control".

First, a hot water supply operation time $\Delta t_{start}$ [sec] (control period information) is stored into the memory section 104 in advance (for example, 7200 sec). Next, the usage of hot water on the previous day, that is, the maximum heat consumption $L_m$ (outgoing heat supply) of the tank unit 305 and the corresponding point in time $t_m$ are stored into the memory section 104. Specifically, the computing section 102 computes the heat consumption of the tank unit 305 in a day every hour, calculates the time $t_m$ [h: mm] at which the heat consumption is maximum and the maximum heat consumption $L_m$ [kJ] at the corresponding time, and stores the computed values into the memory section 104 as learned values (the computing section acting as hot water supply load storing means). In this regard, "learning" means a process in which the controller 110 (the computing section 102) stores at least the heat consumption to be learned, and the occurrence time of the heat consumption into the memory section 104. Here, the time is set on the basis of time measurement by the clock section 105.

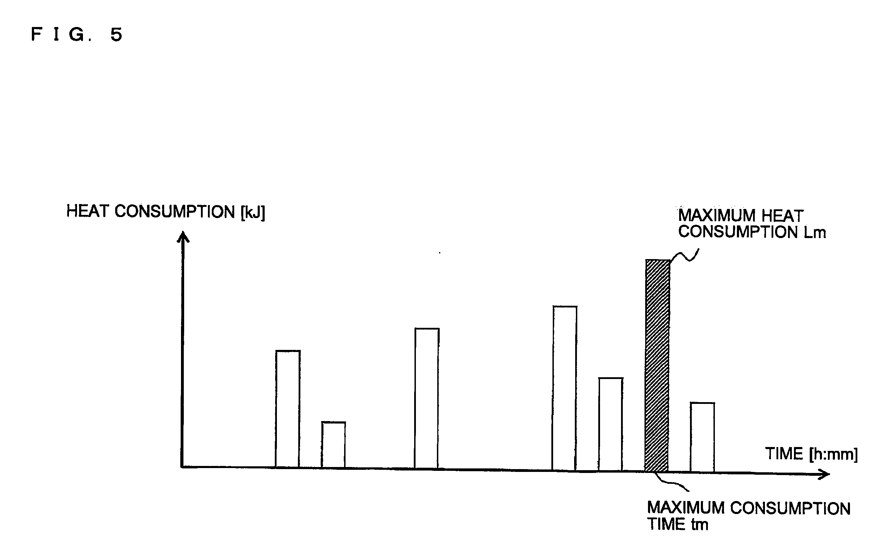

As illustrated in Fig. 5, the computing section 102 computes the power consumption of the hot water storage tank 27 at various times of a day every hour by using Equation (1) (outgoing heat supply calculation rule) (the computing section acting as hot water supply load computing means).

$$L_m = \rho_w \times C_{p,w} \times V_{wo} \times \Delta t_w \times (T_{tankwo} - T_{tankwi}) \tag{1}$$

where

$C_{p,w}$: specific heat of water [kJ/(kgK)],
$L_m$: maximum heat consumption (target hot-water heat storage) [kJ],
$T_{tankwi}$: supply water temperature [degrees C],
$T_{tankwo}$: exiting water temperature [degrees C],
$V_{wo}$: volume flow rate of exiting water [m$^3$/s],
$\Delta t_w$: water exiting time [s], and
$\rho_w$: density of water [kg/m$^3$].

$T_{tankwi}$ is the smallest value of temperature detected in the past (for example, the smallest value of temperature detected in the past three days), among temperatures detected by the inlet water temperature sensor 210.

$T_{tankwo}$ is the temperature detected by the outlet water temperature sensor 211, and is the temperature detected at the time when water exits the hot water storage tank 27.

$V_{wo}$ is the volume flow rate detected by the tank water flow meter 218.

The largest one of the heat consumptions computed from Equation (1) is the maximum heat consumption $L_m$, and the corresponding point in time is the maximum consumption time $t_m$. The maximum heat consumption $L_m$ and the maximum consumption time $t_m$ represent information related to the hot water supply load.

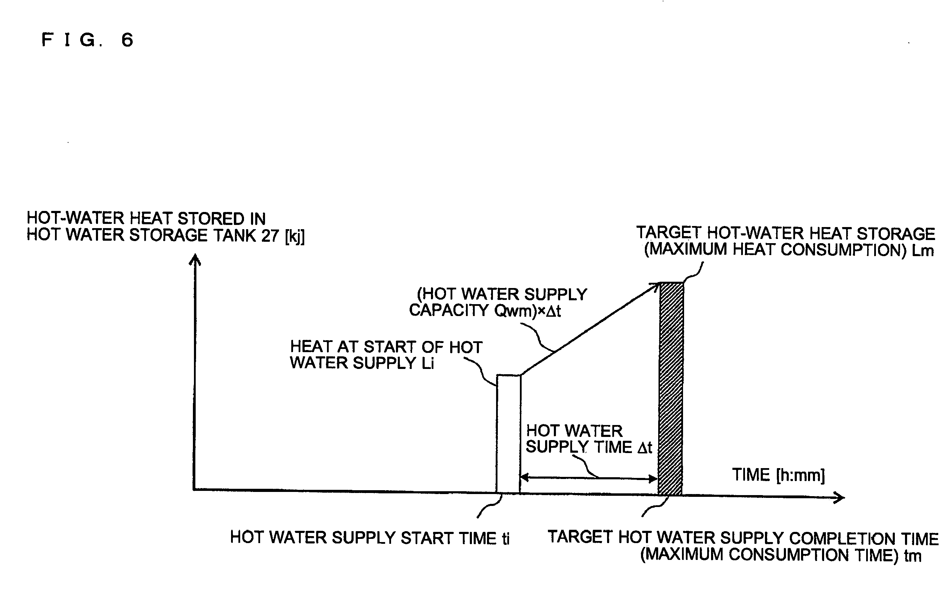

After elapse of one day, the controlling section 103 starts the hot water supply operation mode C when the time (hot water supply start time) that precedes the time $t_m$ at which the maximum heat consumption $L_m$ was recorded on the previous day by $\Delta t_{start}$ is reached as illustrated in Fig. 6. That is, the controlling section 103 controls the compressor 1 at the operating frequency described below. The operating frequency (target operating frequency $F_m$) of the compressor 1 in this case is determined by Equations (2) to (6).

$$\begin{aligned} L_i = \rho_w \times C_{p,w} \times [V_1 \times (T_{tank1} - T_{tankwi}) \\ + (V_2 - V_1) \times (T_{tank2} - T_{tankwi}) \\ + (V_3 - V_2) \times (T_{tank3} - T_{tankwi}) \\ + (V_4 - V_3) \times (T_{tank4} - T_{tankwi})] \end{aligned} \tag{2}$$

$$Q_{wm} = (L_m - L_i)/ \Delta t_{start} \tag{3}$$

$$T_{wom} = T_{wi} + Q_{wm}/(\rho_w \times C_{p,w} \times V_w) \tag{4}$$

$$\Delta F = f (T_{wom} - T_{wo}) \tag{5}$$

$$F_m = F + \Delta F \tag{6}$$

where

$C_{p,w}$: specific heat of water [kJ/(kgK)],
F: operating frequency of the compressor 1 prior to control [Hz],
$F_m$: target operating frequency of the compressor 1 [Hz],
$\Delta_F$: amount by which to change the operating frequency of the compressor 1 [Hz],
$L_i$: hot-water heat stored in the hot water storage tank 27 at the start of hot water supply [kJ],
$L_m$: maximum heat consumption (target hot-water heat storage) [kJ],
$Q_{wm}$: hot water supply capacity target [kW],
$T_{tank1}$: temperature of hot water stored from the uppermost part to a first upper part of the hot water storage tank 27 [degrees C],
$T_{tank2}$: temperature of hot water stored from the first upper part to a second upper part of the hot water storage tank 27 [degrees C],
$T_{tank3}$: temperature of hot water stored from the second upper part to a third upper part of the hot water storage tank 27 [degrees C],
$T_{tank4}$: temperature of hot water stored from the third upper part to the lowermost part of the hot water storage tank 27 [degrees C],
$T_{tankwi}$: supply water temperature [degrees C] (which is detected by the sensor 217),
$T_{wi}$: inlet water temperature [degrees C] (which is detected by the sensor 210),
$T_{wo}$: outlet water temperature [degrees C] (which is detected by the sensor 211),
$T_{wom}$: outlet water temperature target [degrees C] (target temperature of $T_{wo}$),
$\Delta t_{start}$: hot water supply operation time [sec]
$V_1$: internal volume from the uppermost part to the first upper part of the hot water storage tank 27 [m$^3$],
$V_2$: internal volume from the uppermost part to the second upper part of the hot water storage tank 27 [m$^3$].
$V_3$: internal volume from the uppermost part to the third upper part of the hot water storage tank 27 [m$^3$],
$V_4$: internal volume from the uppermost part to the lowermost part of the hot water storage tank 27 [m$^3$],
$V_w$: volume flow rate of intermediate water [m$^3$/s] (intermediate water flow meter 219), and
$\rho_w$: density of water [kg/m$^3$].

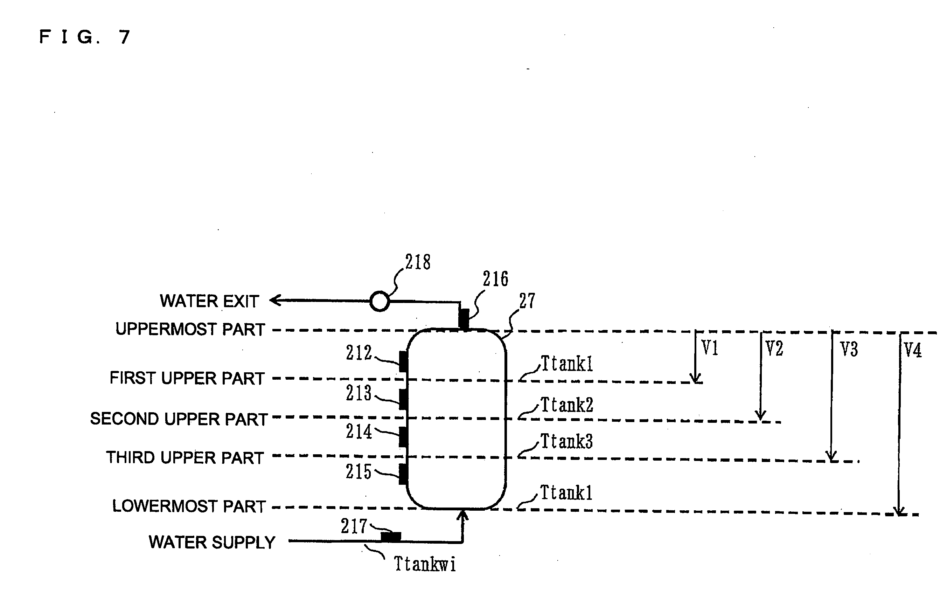

Fig. 7 schematically illustrates a method of computing the heat stored in the hot water storage tank 27. The expression "at the start of hot water supply" means the time corresponding to $\Delta t_{start}$.
Equation (2) is derived from the definitions as illustrated in Fig. 7.
$T_{wi}$ denotes the temperature of water entering the hot water supply unit 304 from the tank unit 305 (which is detected by the sensor 210),
**[0088]** Two denotes the temperature of water exiting the hot water supply unit 304 toward the tank unit 305 (which is detected by the sensor 211),
**[0089]** $T_{tank1}$ denotes the temperature detected by the first hot-water-storage-tank water temperature sensor 212,
**[0090]** $T_{tank2}$ denotes the temperature detected by the second hot-water-storage-tank water temperature sensor 213,
**[0091]** $T_{tank3}$ denotes the temperature detected by the third hot-water-storage-tank water temperature sensor 214,
**[0092]** $T_{tank4}$ denotes the temperature detected by the fourth hot-water-storage-tank water temperature sensor 215, and
$V_w$ denotes the volume flow rate detected by the intermediate water flow meter 219 (water flow meter).
As a specific procedure, the computing section 102 computes the hot-water heat storage Li in the hot water storage tank 27 at the start of hot water supply by Equation (2) (heat storage calculation rule) (the computing section 102 acting as heat storage computing means). Next, the computing section 102 computes the hot water supply capacity target $Q_{wm}$ by using Equation (3) from the maximum heat consumption $L_m$ and the hot water supply operation time $\Delta t_{start}$ that are obtained as a result of learning on the previous day. That is, the target value of the hot water supply capacity (heat rejection capacity) of the plate water-heat exchanger 17 (first radiator) is set. Next, by using the inlet water temperature $T_{wi}$, the computing section 102 computes the outlet water temperature target $T_{wom}$ for the case where the hot water supply capacity target $Q_{wm}$ is set, by Equation (4) (the computing section 102 acting as outlet water temperature target computing means). The outlet water temperature target $T_{wom}$ refers to the target temperature of a water flow detected by the outlet water temperature sensor 211. Then, from the deviation between the outlet water temperature target $T_{wom}$ and the outlet water temperature Two, the computing section 102 computes the amount $\Delta F$ by which to change the operating frequency of the compressor 1 on the basis of Equation (5). Lastly, the computing section 102 computes the target operating frequency $F_m$ of the compressor 1 by Equation (6). By determining the operating frequency of the compressor 1 through this procedure (hereinafter, sometimes referred to as compressor control procedure), running out of hot water can be avoided even when the operating frequency of the compressor 1 is set to a low value. Consequently, it is possible for the controlling section 103 to perform a hot water supply operation with high operation efficiency (the controlling section acting as heating control means).

(With regard to learning of $L_m$ and $t_m$)

When a day is over, the maximum heat consumption $L_m$ and the maximum consumption time $t_m$ of the day are updated as learning results, and are applied to the next day. In this way, changes in the usage of hot water by the user can be reflected.

While the maximum heat consumption $L_m$ and the maximum consumption time $t_m$ are updated every day in the above example, the present invention is not limited to this. The maximum heat consumption $L_m$ and the maximum consumption time $t_m$ may be learned from the usage of hot water over two days or one week. When these values are to be learned over a plurality of days equal to or more than two days, the maximum heat consumption $L_m$ may be calculated as the average of the plurality of days, and the maximum consumption time $t_m$ may be determined to be the time that has been learned the most. When the maximum heat consumption Lm and the maximum consumption time tm are to be learned over one week or more, these values may be calculated for each day of the week (Monday through Sunday). Increasing the number of days to be referenced in this way makes it possible to avoid running out of hot water with precision and ensure high operation efficiency. While learning is performed by dividing time in one-hour intervals, the present invention is not limited to this. Time may be divided in thirty-minute intervals or two-hour intervals.

(Inlet Water Temperature Sensor 210)

The inlet water temperature $T_{wi}$ is set as the temperature detected by the inlet water temperature sensor 210. However, the present invention is not limited to this. The inlet water temperature $T_{wi}$ may be set as the water temperature of the hot water storage tank by regarding the inlet water temperature as being equal to the water temperature of the hot water storage tank. Specifically, as illustrated in Fig. 2, the heat exchange part between intermediate water and the hot water stored in the hot water storage tank 27 is located in a lower part of the hot water storage tank 27, and the intermediate water outlet is located near the lowermost part of the tank. Accordingly, the inlet water temperature may be set as the temperature detected by the fourth hot-water-storage-tank water temperature sensor 215. In this way, it is possible to acquire the inlet water temperature $T_{wi}$ even in the absence of the inlet water temperature sensor 210.

(Outlet Water Temperature Sensor 211)

The outlet water temperature Two is set as the temperature detected by the outlet water temperature sensor 211. However, the present invention is not limited to this. For example, by regarding the condensing temperature of the plate water-heat exchanger 17 and the temperature detected by the outlet water temperature sensor 211 as being equal, the condensing temperature of the plate water-heat exchanger 17 (first radiator) may be computed from the saturation temperature of the pressure detected by the high-pressure sensor 201, and the computed condensing temperature may be used as the outlet water temperature Two. In this way, it is possible to acquire the outlet water temperature Two even in the absence of the outlet water temperature sensor 211.

(Rotation Speed Control for Water Supply Pump 18)

By lowering the rotation speed of the water supply pump 18 to reduce the flow rate $V_w$ of intermediate water (first radiator inflow water), the outlet water temperature target $T_{wom}$ becomes higher, and the temperature difference between the inlet water temperature and the outlet water temperature target becomes greater. Accordingly, by controlling the rotation speed of the water supply pump 18 so that the temperature difference between the inlet water temperature and the outlet water temperature target becomes a predetermined value or more (for example, 5 degrees C or more), it is possible to prevent deterioration of controllability due to a sensor error. Therefore, the control section 103 can control the operating frequency of the compressor 1 with precision (the controlling section acting as water flow control means).

(Hot Water Supply Operation Time $\Delta t_{start}$)

In the foregoing description, the hot water supply operation time $\Delta t_{start}$ is inputted in advance, and thereafter handled as a constant value without being updated. However, as is apparent from Fig. 6, the hot water supply capacity target $Q_{wm}$ varies with the hot water supply operation time $\Delta t_{start}$, and so does the operating frequency of the compressor 1. For this reason, depending on the usage condition of hot water by the user, the deviation between the maximum heat consumption $L_m$ and the hot-water heat storage $L_i$ in the hot water storage tank 27 at the start of hot water supply becomes large. Consequently, the hot water supply capacity target $Q_{wm}$ computed by Equation (3) becomes large, and the operating frequency of the compressor 1 becomes high, resulting in a decrease in operation efficiency. Therefore, in order to ensure a constant operation efficiency, it is desirable to vary also the hot water supply operation time $\Delta t_{start}$ in accordance with the usage condition of hot water by the user.

As a method to achieve this, a standard target hot water supply capacity $Q_{std}$ (standard heat supply) is stored into the memory section 104 in advance, and the hot water supply operation time $\Delta t_{start}$ is updated on the basis of the standard target hot water supply capacity $Q_{std}$ and the hot water supply capacity target $Q_{wm}$. Specifically, after the end of the hot water supply operation mode C, by regarding from Equation (3) that the reciprocals of the hot water supply capacity and hot water supply time are proportional, the computing section 102 computes the hot water supply operation time $\Delta t_{start}$ by Equation (7) from the hot water supply capacity target $Q_{wm}$ determined by Equation (3) and the standard hot water supply capacity $Q_{std}$ (the computing section 102 acting as hot water supply time computing means).

$$\Delta t_{start} = (Q_{wm}/Q_{std}) \times \Delta t_{old} = (L_m - L_i)/ \Delta Q_{std} \qquad (7)$$

where

Q_{std}: standard hot water supply capacity [kW], and
$\Delta t_{old}$: previous hot water supply time [sec].

The computing section 102 updates the hot water supply operation time $\Delta t_{start}$ to the hot water supply operation time $\Delta t_{start}$ determined by computation of Equation (7), from the previous hot water supply time $\Delta t_{old}$ (past hot water supply time), and applies the updated hot water supply operation time $\Delta t_{start}$ to the hot water supply operation from the next day onward. Because there is a possibility that the usage condition of hot water by the user may change, the hot water supply operation time $\Delta t_{start}$ is learned again and updated at the end of a day. Determining the hot water supply operation time $\Delta t_{start}$ in this way makes it possible for any user to control the hot water supply capacity to a predetermined value, thereby ensuring high operation efficiency.

Embodiment 1 is directed to the case where the compressor 1 is controlled only with respect to the maximum heat consumption $L_m$ in the usage of hot water by the user. However, the present invention is not limited to this. This control (hot water supply operation control) may be applied to the case of another heat consumption $L_k$ by storing the heat consumption $L_k$ and the corresponding point in time $t_k$ into the memory section 104. In this way, the hot water supply operation can be performed with high operation efficiency for any kind of load.

(Control for Plurality of Heat Consumptions)

In Embodiment 1, the load stored in the memory section 104 is only the maximum heat consumption $L_m$. However, the present invention is not limited to this. A plurality of (for example, two or three) kinds of loads (plurality of heat consumptions) may be stored in the memory section 104, and this control (hot water supply operation control) may be applied to each kind of load. At this time, since the target hot-water heat storage $L_m$ varies with the heat consumption, in order to obtain a predetermined hot water supply target $Q_{wm}$ irrespective of the heat consumption, that is, irrespective of the target hot-water heat storage, the hot water supply time $\Delta t_{start}$ needs to be stored individually for each kind of load. In this way, it is possible to apply this control a plurality of times in a day, thereby achieving improved energy saving. Specifically, this is performed by the following procedure in a case where this control is to be applied for two kinds of loads, the maximum heat consumption and a second heat consumption (the maximum heat consumption > the second heat consumption).

(a) First, the maximum heat consumption in a day and the maximum consumption time that is the corresponding point in time are stored into the memory section 104, and a second heat consumption and a second consumption time that is the corresponding point in time are stored into the memory section 104.

(b) Then, after elapse of a day, the hot water supply operation mode C is started when the time that precedes the maximum consumption time by a maximum hot water supply time stored in the memory section 104 in advance is reached. The operating frequency of the compressor 1 in this case is determined by Equations (2) to (6).

(c) After the end of the hot water supply operation mode C, the maximum hot water supply time that is to be applied to the next day is computed from Equation (7).

(d) The hot water supply operation mode C is started when the time that precedes the second consumption time by a second hot water supply time stored in the memory section 104 in advance is reached. The operating frequency of the compressor 1 in this case is determined by Equations (2) to (6). After the end of the hot water supply operation mode C, the second hot water supply time that is to be applied to the next day is computed from Equation (7).

(e) Then, a hot water supply operation is executed on the next day in the same manner as the previous day.

While Embodiment 1 is directed to the case of the combined air-conditioning and hot water supply system 100, the present invention is not limited to this. The present technique can be applied also to the hot water supply operation of a hot water supply system in which the heat source unit 301 and the hot water supply unit 304 are connected by a refrigerant communication pipe, that is, a hot water supply system that does not have an air-conditioning function and is capable of only hot water supply operation.

[Simultaneous Heating and Hot Water Supply Operation Mode D]

In the simultaneous heating and hot water supply operation mode D (parallel heat rejection operation), the four-way valve 3 is in the state indicated by the broken line in Fig. 4, that is, the discharge side of the compressor 1 is connected to the gas side of the plate water-heat exchanger 17, and the suction side of the compressor 1 is connected to the gas side of the outdoor heat exchanger 4. Further, the first discharge solenoid valve 2 is open, the second discharge solenoid valve 15 is open, and the low-pressure equalizing solenoid valve 21 is closed.

In this state of the refrigerant circuit, the compressor 1, the outdoor air-sending device 5, the indoor air-sending devices 11a and 11b, and the water supply pump 18 are activated. Then, a low-pressure gas refrigerant is sucked into the compressor 1, where the gas refrigerant is compressed into a high temperature/high pressure gas refrigerant. Thereafter, the high temperature/high pressure gas refrigerant is distributed so as to flow through the first discharge solenoid valve 2 or the second discharge solenoid valve 15.

The refrigerant that has entered the second discharge solenoid valve 15 exits the heat source unit 301, and enters the hot water supply unit 304 via the hot water supply gas extension pipe 16. The refrigerant that has entered the hot water supply unit 304 enters the plate water-heat exchanger 17, where the refrigerant is condensed by exchanging heat with the water supplied by the water supply pump 18 and turns into a high-pressure liquid refrigerant, and exits the plate water-heat exchanger 17. After the refrigerant that has heated the water in the plate water-heat exchanger 17 exits the hot water supply unit 304, the refrigerant enters the branch unit 302 via the hot water supply liquid pipe 19, and is reduced in pressure by the hot water supply pressure-reducing mechanism 20 and turns into a two-phase gas-liquid refrigerant at low pressure. Thereafter, the refrigerant merges with the refrigerant that has flown through each of the indoor pressure-reducing mechanisms 8a and 8b at a branch part 26, and exits the branch unit 302. The flow path that branches out from the discharge side of the compressor 1 and leads to the first discharge solenoid valve 2, the four-way valve 3, the indoor heat exchangers 10a and 10b, and the indoor pressure-reducing mechanisms 8a and 8b is a branch flow path with respect to the flow path of the hot water supply operation (heat rejection branch flow path).

The hot water supply pressure-reducing mechanism 20 is controlled by the controlling section 103 to such an opening degree that the degree of subcooling on the liquid side of the plate water-heat exchanger 17 becomes a predetermined value. The degree of subcooling on the liquid side of the plate water-heat exchanger 17 is the same as in the case of the hot water supply operation. The hot water supply pressure-reducing mechanism 20 controls the flow rate of refrigerant flowing through the plate water-heat exchanger 17 so that the degree of subcooling of the refrigerant on the liquid side of the plate water-heat exchanger 17 becomes a predetermined value. Consequently, the high-pressure liquid refrigerant that has been condensed in the plate water-heat exchanger 17 has a predetermined degree of subcooling. In this way, in the plate water-heat exchanger 17, refrigerant flows at a flow rate suited to the hot water supply request made in accordance with the usage condition of hot water in the facility where the hot water supply unit 304 is installed.

Meanwhile, the refrigerant that has entered the first discharge solenoid valve 2 passes through the four-way valve 3, and thereafter, the refrigerant exits the heat source unit 301, and flows to the branch unit 302 via the gas extension pipe 13. Thereafter, the refrigerant enters the use units 303a and 303b via the indoor gas pipes 12a and 12b. The refrigerant that has entered the use units 303a and 303b enters the indoor heat exchangers 10a and 10b (second radiator), where the refrigerant exchanges heat with the indoor air supplied by the indoor air-sending devices 11 a and 11 b and turns into a high-pressure liquid refrigerant, and exits the indoor heat exchangers 10a and 10b. The refrigerant that has heated the indoor air in the indoor heat exchangers 10a and 10b exits the use units 303a and 303b, enters the branch unit 302 via the indoor liquid pipes 9a and 9b, and is reduced in pressure by the indoor pressure-reducing mechanisms 8a and 8b (second pressure-reducing mechanism) and turns into a two-phase gas-liquid or liquid-phase refrigerant at low pressure. Thereafter, the refrigerant that has exited the indoor pressure-reducing mechanisms 8a and 8b merges with the refrigerant that has flown through the hot water supply pressure-reducing mechanism 20 at the branch part 26, and exits the branch unit 302.

Each of the indoor pressure-reducing mechanisms 8a and 8b is controlled so that there is no temperature difference (heated indoor temperature difference) in the use unit 303a or 303b, which is calculated by subtracting an indoor set temperature from the indoor suction temperature detected by the indoor suction temperature sensor 208a or 208b. Accordingly, refrigerant flows through each of the indoor heat exchangers 10a and 10b at a flow rate suited to the heating load required for the air-conditioned space where the use unit 303a or 303b is installed.

The refrigerant that has exited the branch unit 302 enters the heat source unit 301 via the liquid extension pipe 7, and after passing through the outdoor pressure-reducing mechanism 6, the refrigerant enters the outdoor heat exchanger 4. The opening degree of the outdoor pressure-reducing mechanism 6 is being controlled to the full opening. The refrigerant that has entered the outdoor heat exchanger 4 evaporates by exchanging heat with the outside air supplied by the outdoor air-sending device 5, and turns into a low-pressure gas refrigerant. After exiting the outdoor heat exchanger 4, this refrigerant passes through the accumulator 14 via the four-way valve 3, and is thereafter sucked into the compressor 1 again.

The air flow of the outdoor air-sending device 5 is controlled by the controlling section 103 so that the evaporating temperature becomes a predetermined value in accordance with the outside air temperature detected by the outside air temperature sensor 205. Here, the evaporating temperature is calculated from the temperature detected by the outdoor liquid temperature sensor 204.

In the simultaneous heating and hot water supply operation mode D, it is necessary to output a heating capacity suited to a heating load while supplying hot water. In related art, in order to avoid running out of hot water while a hot water supply operation is performed, it is necessary to control the frequency of the compressor to a high frequency in an attempt to provide a large hot water supply capacity. By applying the hot water supply operation control, it is possible to grasp the minimum required hot water supply capacity, and control the operating frequency of the compressor 1 accordingly. Consequently, it is possible to achieve high operation efficiency that outputs a heating capacity suited to a heating load while performing a hot water supply operation simultaneously.

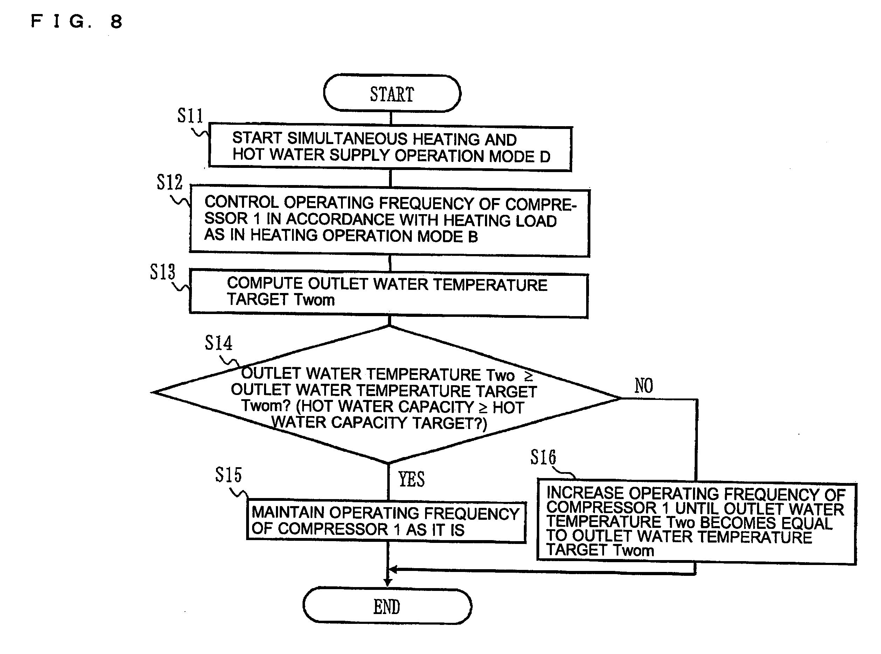

Fig. 8 is a flowchart illustrating control of the compressor in the simultaneous heating and hot water supply operation mode D. After the simultaneous heating and hot water supply operation mode D is started in step S11, in step S12, the operating frequency of the compressor 1 is controlled in accordance with a heating load in the same manner as in the heating operation mode B. That is, in Embodiment 1, the operating frequency of the compressor 1 is controlled by the controlling section 103 so that the condensing temperature becomes a predetermined value in accordance with the maximum heated indoor temperature difference. The method of calculating the condensing temperature is the same as in the case of the cooling operation. In this operation, a heating capacity suited to a heating load is secured. Next, in step S13, the outlet water temperature target $T_{wom}$ is computed in the same manner as in the case of the hot water supply operation mode C. That is, the hot water supply capacity target $Q_{wm}$ (the minimum required hot water supply capacity) is computed by Equation (3) by using the maximum heat capacity consumption $L_m$ and the maximum consumption time $t_m$ that have been learned through a hot water supply operation, and the outlet water temperature target $T_{wom}$ is computed by Equation (4). Next, in step S14, the outlet water temperature Two and the outlet water temperature target $T_{wom}$ are compared with each other. Here, it is determined whether the hot water supply capacity determined by the operating frequency of the compressor 1 controlled in step S12 is sufficient for storing the quantity of heat equal to the maximum heat consumption $L_m$ in the hot water storage tank 27 by the maximum consumption time $t_m$. That is, it is determined whether the hot water supply capacity is larger than the hot water supply capacity target $Q_{wm}$. If the outlet water temperature Two is higher than the outlet water temperature target $T_{wom}$, it is determined that a sufficient hot water supply capacity is secured, and the processing proceeds to step S15 and the operating frequency of the compressor 1 is maintained as it is. If the outlet water temperature $T_{wo}$ is lower than the outlet water temperature target $T_{wom}$, it is determined that the hot water supply capacity is insufficient, that is, the hot water supply capacity is smaller than the hot water supply capacity target, and the processing proceeds to step S16 where the operating frequency of the compressor 1 is raised until the outlet water temperature $T_{wo}$ becomes equal to the outlet water temperature target $T_{wom}$.

Through this operation, in a case where the hot water supply capacity is larger than the hot water supply capacity target $Q_{wm}$, the minimum required hot water supply capacity can be determined in accordance with the actual usage of hot water by the user in the past while outputting a heating capacity suited to a heating load, and the operating frequency of the compressor 1 can be set accordingly. Therefore, as compared with a case where the usage of hot water by the user is not used as in related art, it is possible to perform the simultaneous heating and hot water supply operation while controlling the operating frequency of the compressor 1 to a low frequency.

As in the case of the hot water supply operation mode C, by computing the hot water supply operation time

target $\Delta t_m$ by Equation (7), and updating the hot water supply operation time $\Delta t_{start}$, it is possible for any user to make the hot water supply capacity target $Q_{wm}$ constant with respect to the standard hot water supply capacity $Q_{std}$, thereby achieving high operation efficiency.

[Simultaneous Cooling and Hot Water Supply Operation Mode E]

In the simultaneous cooling and hot water supply operation mode E (parallel heat removal and condensation operation), the use units 303a and 303b are in cooling operation, and the hot water supply unit 304 is in hot water supply operation. In the simultaneous cooling and hot water supply operation mode E, the four-way valve 3 is in the state indicated by the broken line. That is, the discharge side of the compressor 1 is connected to the plate water-heat exchanger 17 via the hot water supply gas extension pipe 16, and the suction side of the compressor 1 is connected to the gas side of the outdoor heat exchanger 4. The first discharge solenoid valve 2 is closed, the second discharge solenoid valve 15 is open, and the low-pressure equalizing solenoid valve 21 is open.

In this state of the refrigerant circuit, the compressor 1, the outdoor air-sending device 5, the indoor air-sending devices 11a and 11 b, and the water supply pump 18 are activated. Then, a low-pressure gas refrigerant is sucked into the compressor 1, where the refrigerant is compressed into a high temperature/high pressure gas refrigerant. Thereafter, the high temperature/high pressure gas refrigerant enters the second discharge solenoid valve 15.

The refrigerant that has entered the second discharge solenoid valve 15 exits the heat source unit 301, and enters the hot water supply unit 304 via the hot water supply gas extension pipe 16. The refrigerant that has entered the hot water supply unit 304 enters the plate water-heat exchanger 17, where the refrigerant condenses by exchanging heat with the water supplied by the water supply pump 18 and turns into a high-pressure liquid refrigerant, and exits the plate water-heat exchanger 17. The refrigerant that has heated the water in the plate water-heat exchanger 17 exits the hot water supply unit 304, and enters the branch unit 302 via the hot water supply liquid pipe 19.

The refrigerant that has entered the branch unit 302 is reduced in pressure by the hot water supply pressure-reducing mechanism 20, and turns into a two-phase gas-liquid or liquid-phase refrigerant at intermediate pressure. Here, the hot water supply pressure-reducing mechanism 20 is controlled to the maximum opening degree. Thereafter, the refrigerant is divided into a flow of refrigerant that enters the liquid extension pipe 7, and a flow of refrigerant that enters the indoor pressure-reducing mechanisms 8a and 8b. As illustrated in Fig. 1, the refrigerant that flows toward the indoor unit divides into branches at the branch part 26. In Fig. 1, the flow path along the indoor pressure-reducing mechanisms 8a and 8b (second pressure-reducing mechanism), the indoor heat exchangers 10a and 10b (second evaporator), and the four-way valve 3 constitutes a heat removal branch flow path.

The refrigerant that has entered the indoor pressure-reducing mechanisms 8a and 8b is reduced in pressure into a two-phase gas-liquid state at low pressure, and enters the use units 303a and 303b via the indoor liquid pipes 9a and 9b. The refrigerant that has entered the use units 303a and 303b enters the indoor heat exchangers 10a and 10b, where the refrigerant is evaporated by exchanging heat with the indoor air supplied by the indoor air-sending devices 11a and 11b and turns into a low-pressure gas refrigerant.

Here, each of the indoor pressure-reducing mechanisms 8a and 8b is controlled so that there is no temperature difference (cooled indoor temperature difference) in the use unit 303a or 303b, which is calculated by subtracting a set temperature from the indoor suction temperature detected by the indoor suction temperature sensor 208a or 208b. Accordingly, refrigerant flows through each of the indoor heat exchangers 10a and 10b at a flow rate suited to the cooling load required for the air-conditioned space where the use unit 303a or 303b is installed.

The refrigerant that has flown through the indoor heat exchangers 10a and 10b thereafter exits the use units 303a and 303b, and enters the heat source unit 301 via the indoor gas pipes 12a and 12b, the branch unit 302, and the gas extension pipe 13. The refrigerant that has entered the heat source unit 301 passes through the four-way valve 3, and thereafter merges with the refrigerant that has passed through the outdoor heat exchanger 4.

Meanwhile, the refrigerant that has entered the liquid extension pipe 7 thereafter enters the heat source unit 301, and after being reduced in pressure into a two-phase gas-liquid refrigerant at low pressure by the outdoor pressure-reducing mechanism 6, the refrigerant enters the outdoor heat exchanger 4, where the refrigerant evaporates by exchanging heat with the outdoor air supplied by the outdoor air-sending device 5. Thereafter, the refrigerant passes through the low-pressure equalizing solenoid valve 21, and merges with the refrigerant that has passed through each of the indoor heat exchangers 10a and 10b. Thereafter, the refrigerant passes through the accumulator 14 and is sucked into the compressor 1 again.

Since the low-pressure equalizing solenoid valve 21 is installed for the purpose of lowering the pressure in the outdoor heat exchanger 4, its diameter is small. Therefore, it is not possible to remove excess heat of cooling. Therefore, the air flow of the outdoor air-sending device 5 is controlled to the minimum value required to cool the radiator plate, and the opening degree of the outdoor pressure-reducing mechanism 6 is controlled to a small opening.

In the simultaneous cooling and hot water supply operation mode E, it is necessary to output a cooling capacity suited to a cooling load while supplying hot water. In related art, in order to avoid running out of hot water while a hot water supply operation is performed, it is necessary to control the frequency of the compressor to a high frequency in an attempt to provide a large hot water supply capacity. Consequently, the cooling capacity becomes excessive, and it is necessary to switch between the hot water supply operation mode C and the simultaneous cooling and hot water supply operation mode E alternately, resulting in poor operation efficiency. By applying the present technique, it is possible to grasp the minimum required hot water supply capacity, and control the operating frequency of the compressor 1 accordingly. Consequently, by employing the present technique, it is possible to achieve an operation that outputs a cooling capacity suited to a cooling load while performing a hot water supply operation simultaneously, thereby obtaining high operation efficiency.

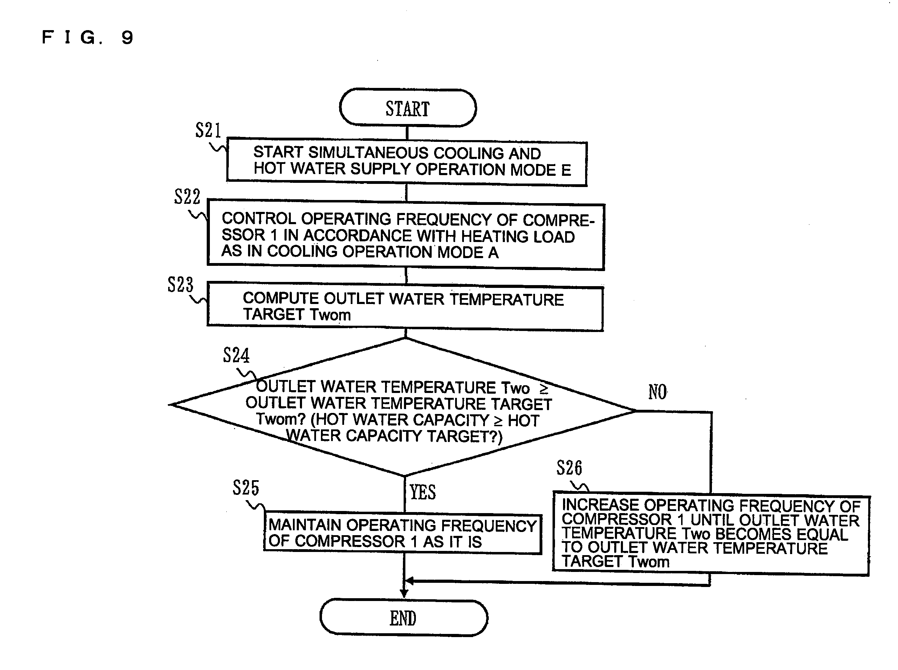

Fig. 9 is a flowchart illustrating control of the compressor in the simultaneous cooling and hot water supply operation mode E. After the simultaneous cooling and hot water supply operation mode E is started in step S21, in step S22, the operating frequency of the compressor 1 is controlled in accordance with a cooling load in the same manner as in the cooling operation mode A. That is, in Embodiment 1, the operating frequency of the compressor 1 is controlled by the controlling section 103 so that the evaporating temperature becomes a predetermined value in accordance with the maximum cooled indoor temperature difference. The method of calculating the evaporating temperature is the same as in the case of the cooling operation. In this operation, a cooling capacity suited to a cooling load is secured. Next, in step S23, the outlet water temperature target $T_{wom}$ is computed in the same manner as in the case of the hot water supply operation mode C. That is, the hot water supply target $Q_{wm}$ (the minimum required hot water supply capacity) is computed by Equation (3) by using the maximum heat capacity consumption $L_m$ and the maximum consumption time $t_m$ that have been learned through a hot water supply operation, and the outlet water temperature target $T_{wom}$ is computed by Equation (4). Next, in step S24, the outlet water temperature $T_{wo}$ and the outlet water temperature target $T_{wom}$ are compared with each other. Here, it is determined whether the hot water supply capacity determined by the operating frequency of the compressor 1 controlled in step S22 is sufficient for storing the quantity of heat equal to the maximum heat consumption $L_m$ in the hot water storage tank 27 by the maximum consumption time $t_m$. That is, it is determined whether the hot water supply capacity is larger than the hot water supply capacity target $Q_{wm}$. If the outlet water temperature Two is higher than the outlet water temperature target $T_{wom}$, it is determined that a sufficient hot water supply capacity is secured, and the processing proceeds to step S25 and the operating frequency of the compressor 1 is maintained as it is. If the outlet water temperature Two is lower than the outlet water temperature target $T_{om}$, it is determined that the hot water supply capacity is insufficient, that is, the hot water supply capacity is smaller than the hot water supply capacity target, and the processing proceeds to step S26 where the operating frequency of the compressor 1 is raised until the outlet water temperature Two becomes equal to the outlet water temperature target $T_{wom}$.

Through this operation, in a case where the hot water supply capacity is larger than the hot water supply capacity target $Q_{wm}$, the minimum required hot water supply capacity can be determined in accordance with the actual usage of hot water by the user in the past while outputting a cooling capacity suited to a cooling load, and the operating frequency of the compressor 1 can be set accordingly. Therefore, as compared with a case where the usage of hot water by the user is not used as in related art, it is possible to perform the simultaneous cooling and hot water supply operation while controlling the operating frequency of the compressor 1 to a low frequency. In related art, even in a case where the cooling load is small, the hot water supply capacity is set to a large value in order to prevent running out of hot water, resulting in an increase in cooling capacity. According to the present invention, however, operation can be performed while making the hot water supply capacity small, which makes it possible to perform operation while setting the cooling capacity small in a case where the cooling load is small, thereby achieving high operation efficiency. Moreover, it is also possible to avoid running out of hot water when supplying hot water.

As in the case of the hot water supply operation mode C, by computing the hot water supply operation time target $\Delta t_m$ by Equation (7), and updating the hot water supply operation time $\Delta t_{start}$, it is possible for any user to keep the hot water supply capacity target $Q_{wm}$ constant, thereby achieving high operation efficiency

As described in the foregoing, the combined air-conditioning and hot water supply system 100 according to Embodiment 1 makes it possible to perform a hot water supply operation with high operation efficiency, and also avoid running out of hot water.

While Embodiment 1 described above is directed to the combined air-conditioning and hot water supply system 100 (refrigeration cycle apparatus), it is also possible to grasp the operation of the combined air-conditioning and hot water supply system 100 as a refrigeration cycle control method. Reference Signs List

1 compressor, 2 first discharge solenoid valve, 3 four-way valve, 4 outdoor heat exchanger, 5 outdoor air-sending device, 6 outdoor pressure-reducing mechanism, 7 liquid extension pipe, 8a, 8b indoor pressure-reducing mechanism, 9a, 9b indoor liquid pipe, 10a, 10b indoor heat exchanger, 11a, 11b indoor air-sending device, 12a, 12b indoor gas pipe, 13 gas extension pipe, 14 accumulator, 15 second discharge solenoid valve, 16 hot water supply gas extension pipe, 17 plate water-heat exchanger, 18 water supply pump, 19 hot water supply liquid pipe, 20 hot water supply pressure-reducing mechanism, 21 low-pressure equalizing solenoid valve, 22 upstream water pipe, 23 downstream water pipe, 24 water inflow pipe connecting part, 25 water downstream pipe connecting part, 26 branch part, 27 hot water storage tank, 100 combined air-conditioning and hot water supply system, 110 controller, 102 computing section, 103 controlling section, 104 memory section, 105 clock section, 201 high-pressure sensor, 202 discharge temperature sensor, 203 outdoor gas temperature sensor, 204 outdoor liquid temperature sensor, 205 outside air temperature sensor, 206a, 206b indoor liquid temperature sensor, 207a, 207b indoor gas temperature sensor, 208a, 208b indoor suction temperature sensor, 209 hot water supply liquid temperature sensor, 210 inlet water temperature sensor, 211 outlet water temperature sensor, 212 first hot-water-storage-tank water temperature sensor, 213 second hot-water-storage-tank water temperature sensor, 214 third hot-water-storage-tank water temperature sensor, 215 fourth hot-water-storage-tank water temperature sensor, 216 hot-water-storage-tank exiting water temperature sensor, 217 hot-water-storage-tank entering water temperature sensor, 218 tank flow meter, 219 intermediate water flow meter, 301 heat source unit, 302 branch unit, 303a, 303b use unit, 304 hot water supply unit, 305 tank unit

**Claims**

1. A refrigeration cycle apparatus (100) in which a refrigerant is circulated, comprising:

   a refrigeration cycle mechanism that has a compressor (1) whose operating frequency can be controlled, a first radiator (17) that supplies heat by means of the refrigerant to tank water that is water stored in a hot water storage tank (27), a first pressure-reducing mechanism (20), and a first evaporator (4), the refrigerant circulating in an order of the compressor (1), the first radiator (17), the first pressure-reducing mechanism (20), and the first evaporator (4); and
   a controller (110),
   wherein the controller (110) includes,

   a memory section (104) that stores control period information indicating a preset control period, and is capable of storing other information,
   a computing section (102) that calculates a heat consumption on a time period basis, the heat consumption indicating a quantity of heat that has been supplied to an outside by the tank water within the time, the time period being one of divided predetermined time periods of a day, stores the calculated heat consumption and a corresponding point in time into the memory section (104), and computes current heat storage in the tank water, and
   a controlling section (103) that controls the operating frequency of the compressor (1),

   wherein the computing section (102),
   from the heat consumptions of at least one day in the past stored in the memory section (104), calculates a maximum heat consumption that is to be the largest among other heat consumptions to be generated on a current day and a maximum consumption time that is a corresponding point in time to the maximum heat consumption,
   at a time that precedes the maximum consumption time by the control period, computes the heat storage in the tank water, and on a basis of the heat storage and the maximum heat consumption of the current day, computes a hot water supply capacity target and the operating frequency of the compressor (1), the hot water supply capacity target serving as a heat rejection target value necessary for the first radiator (17) to bring the heat storage in the tank water into the maximum heat consumption at the maximum consumption time,
   wherein the controlling section (103) controls the compressor (1) at the operating frequency computed by the computing section (102), and
   wherein the computing section (102) updates the control period stored in the memory section (104) on a basis of the hot water supply capacity target, and uses the updated control period for computing the operating frequency of the compressor (1) in accordance with the maximum heat consumption on a following day.

2. The refrigeration cycle apparatus (100) of claim 1,
   wherein the memory section (104) stores standard heat supply that indicates a standard value of heat to be supplied to the tank water per unit time, and
   wherein the computing section (102), after elapse of the maximum consumption time of the current day, updates the control period stored in the memory section (104) into a new control period in accordance with a proportion of the standard heat supply to the hot water supply capacity target, and stores the updated new control period into the memory section (104).

3. The refrigeration cycle apparatus (100) of claim 1 or 2, further comprising:

   an outlet temperature sensor (211) that detects a temperature of outflow water exiting from an outlet of the first radiator (17) in a water flow path, the water flow path being a flow path of water that enters the first radiator (17) from the hot water storage tank (27), passes through the first radiator (17), and returns to the hot water storage tank (27),
wherein the computing section (102),

at the time that precedes the maximum consumption time by the control period, computes the heat storage in the tank water, and on the basis of the heat storage and the maximum heat consumption of the current day, calculates a target temperature indicating a target temperature of the outflow water to bring the heat storage in the tank water into the maximum heat consumption at the maximum consumption time, and computes the operating frequency of the compressor (1) that brings the temperature of the outflow water detected by the outlet temperature sensor (211) into the target temperature.

4. The refrigeration cycle apparatus (100) of any one of claims1 to 3, further comprising:

a tank water sensor (212 to 215) that detects a temperature of the tank water,
wherein the computing section (102) calculates the current heat storage in the tank water by using the temperature of the tank water detected by the tank water sensor (212 to 215).

5. The refrigeration cycle apparatus (100) of claim 1, further comprising:

an inlet temperature sensor (210) that detects a temperature of inflow water entering an inlet of the first radiator (17) in a water flow path, the water flow path being a flow path of water that enters the first radiator (17) from the hot water storage tank (27), passes through the first radiator (17), and returns to the hot water storage tank (27); and
a high-pressure sensor (201) that detects a high pressure from a discharge side of the compressor (1) to a liquid side of the first pressure-reducing mechanism (20),
wherein the computing section (102) computes a condensing temperature of the first radiator (17) on a basis of the high pressure detected by the high-pressure sensor (201); and
wherein the controlling section (103) controls the operating frequency of the compressor (1) by further using the condensing temperature calculated by the computing section (102) and the temperature of the inflow water detected by the inlet temperature sensor (210).

6. The refrigeration cycle apparatus (100) of claim 3, further comprising:

a water supply pump (18) that causes the water to flow through the water flow path; and
an inlet temperature sensor (210) that detects a temperature of inflow water entering an inlet of the first radiator (17) in the water flow path,
wherein the controlling section (103) keeps a temperature difference between the temperature of the inflow water detected by the inlet temperature sensor (210) and the target temperature indicating the target temperature of the outflow water, at a predetermined value or more by controlling a flow rate of the inflow water entering the first radiator (17) through control of the water supply pump (18), while controlling the operating frequency of the compressor (1).

7. The refrigeration cycle apparatus (100) of claim 3, further comprising:

a heat rejection branch flow path that is a branch flow path that branches out from a discharge side of the compressor (1), the heat rejection branch flow path having a second radiator (10a, 10b) and a second pressure-reducing mechanism (8a, 8b), the heat rejection flow path being connected in an order of the second radiator (10a, 10b) and the second pressure-reducing mechanism (8a, 8b) from the discharge side of the compressor (1) and merging with a portion between the first pressure-reducing mechanism (20) and the first radiator (17),
wherein upon executing a parallel heat rejection operation that causes a discharged refrigerant discharged from the compressor (1) to enter and circulate through the first radiator (17) and the second radiator (10a, 10b), the controlling section (103) controls the operating frequency of the compressor (1) on a basis of a heating load indicating a load required for the second radiator (10a, 10b),
wherein the computing section (102) compares the temperature of the outflow water when the operating frequency of the compressor (1) is being controlled on a basis of the heating load with the target temperature, when the temperature of the outflow water is lower than the target temperature,
the controlling section (103) changes the operating frequency of the compressor (1) to an operating frequency that brings the temperature of the outflow water into the target temperature.

8. The refrigeration cycle apparatus (100) of claim 3, further comprising:

a heat removal branch flow path that branches out from a branch part between the first pressure-reducing mechanism (20) and the first evaporator (4), the heat removal branch flow path having a second pressure-reducing mechanism (8a, 8b) and a second evaporator, the heat removal branch flow path being connected in an order of the second pressure-reducing mechanism (8a, 8b) and the second evaporator from the branch part and merging with a suction side of the compressor (1),

wherein the controlling section (103), upon executing a parallel heat removal and heat rejection operation that is a parallel operation of a heat rejection operation of the first radiator (17) and a heat removal operation of the second evaporator, the heat rejection operation causing the discharged refrigerant discharged from the compressor (1) to be sucked into the compressor (1) from the suction side via the first radiator (17), the first pressure-reducing mechanism (20), the branch part, and the first evaporator (4), the heat removal operation causing the discharged refrigerant to be sucked into the compressor (1) from the suction side via the first radiator (17), the first pressure-reducing mechanism (20), the branch part, the second pressure-reducing mechanism (8a, 8b), and the second evaporator (10a, 10b), controls the operating frequency of the compressor (1) on a basis of a cooling load indicating a load required for the second evaporator,

wherein the computing section (102) compares the temperature of the outflow water when the operating frequency of the compressor (1) is being controlled on a basis of the cooling load with the target temperature, and when the temperature of the outflow water is lower than the target temperature,

the controlling section (103) changes the operating frequency of the compressor (1) to an operating frequency that brings the temperature of the outflow water into the target temperature.

9. A refrigeration cycle control method for a refrigeration cycle apparatus (100) through which a refrigerant is circulated, the refrigeration cycle apparatus (100) including

a refrigeration cycle mechanism that has a compressor (1) whose operating frequency can be controlled, a first radiator (17) that supplies heat by means of the refrigerant to tank water that is water stored in a hot water storage tank (27), a first pressure-reducing mechanism (20), and a first evaporator (4), the refrigerant circulating in an order of the compressor (1), the first radiator (17), the first pressure-reducing mechanism (20), and the first evaporator (4),

a memory section (104) that stores control period information indicating a preset control period, and is capable of storing other information,

a computing section (102) that calculates a heat consumption on a time period basis, the heat consumption indicating a quantity of heat that has been supplied to an outside by the tank water within the time period, the time period being one of divided predetermined time periods of a day, stores the calculated heat consumption and a corresponding point in time into the memory section (104), and computes current heat storage in the tank water and

a controlling section (103) that controls the operating frequency of the compressor (1),

the refrigeration cycle control method comprising:

from the heat consumptions of at least one day in the past stored in the memory section (104), calculating a maximum heat consumption that is to be the largest among other heat consumptions to be generated on a current day and a maximum consumption time that is a corresponding point in time to the maximum heat consumption, by the computing section (102);

at a time that precedes the maximum consumption time by the control period, computing the heat storage in the tank water, and on a basis of the heat storage and the maximum heat consumption of the current day, computes a hot water supply capacity target and the operating frequency of the compressor (1), the hot water supply capacity target being a hot water supply capacity target serving as a heat rejection target value necessary for the first radiator (17) to bring the heat storage in the tank water into the maximum heat consumption at the maximum consumption time, by the computing section (102);

controlling the compressor (1) at the operating frequency computed by the computing section (102), by the controlling section (103); and

updating the control period stored in the memory section (104) on a basis of the hot water supply capacity target, and using the updated control period for computing the operating frequency of the compressor (1) in accordance with the maximum heat consumption on the following day, by the computing section (102).

**EP 2 677 251 B1**

**Patentansprüche**

1. Kältekreislaufvorrichtung (100), in welcher ein Kältemittel zirkuliert, umfassend:

    einen Kältekreislaufmechanismus, welcher einen Kompressor (1), dessen Betriebsfrequenz gesteuert werden kann, einen ersten Radiator (17), welcher Wärme mittels des Kältemittels zu Tankwasser zuführt, welches in einem Heißwasserspeichertank (27) gespeichertes Wasser ist, einen ersten Druckreduziermechanismus (20) und einen ersten Verdampfer (4) aufweist, wobei das Kältemittel in einer Reihenfolge aus dem Kompressor (1), dem ersten Radiator (17), dem ersten Druckreduziermechanismus (20) und dem ersten Verdampfer (4) zirkuliert; und
    eine Steuerung (110),
    wobei die Steuerung (110) aufweist:

        einen Speicherabschnitt (104), welcher eine Steuerdauerinformation speichert, welche eine voreingestellte Steuerdauer anzeigt und in der Lage ist, andere Informationen zu speichern,
        einen Rechenabschnitt (102), welcher einen Wärmeverbrauch auf einer Zeitdauerbasis berechnet, wobei der Wärmeverbrauch eine Menge von Wärme anzeigt, welche innerhalb der Zeit von dem Tankwasser zu einer Außenseite geführt wurde, wobei die Zeitdauer eine von geteilten vorbestimmten Zeitdauern eines Tages ist, den berechneten Wärmeverbrauch und einen entsprechenden Zeitpunkt in dem Speicherabschnitt (104) speichert und eine derzeitige Wärmespeicherung in dem Tankwasser berechnet, und
        einen Steuerabschnitt (103), welcher die Betriebsfrequenz des Kompressors (1) steuert,

    wobei der Rechenabschnitt (102)
    aus den in dem Speicherabschnitt (104) gespeicherten Wärmeverbräuchen von mindestens einem Tag in der Vergangenheit einen maximalen Wärmeverbrauch, welcher der Größte unter anderen an einem derzeitigen Tag zu erzeugenden Wärme Verbräuchen ist, und eine maximale Verbrauchszeit, welche ein entsprechender Zeitpunkt für den maximalen Wärmeverbrauch ist, berechnet,
    zu einer Zeit, welche der maximalen Verbrauchszeit um die Steuerdauer vorausgeht, die Wärmespeicherung in dem Tankwasser berechnet und auf einer Basis der Wärmespeicherung und des maximalen Wärmeverbrauchs des derzeitigen Tages ein Heißwasserzuführungskapazitätsziel und die Betriebsfrequenz des Kompressors (1) berechnet, wobei das Heißwasserzuführungskapazitätsziel als ein Wärmeabführungszielwert dient, welcher für den ersten Radiator (17) notwendig ist, um die Wärmespeicherung in dem Tankwasser auf den maximalen Wärmeverbrauch zu der maximalen Verbrauchszeit zu bringen,
    wobei der Steuerabschnitt (103) den Kompressor (1) bei der Betriebsfrequenz, welche von dem Rechenabschnitt (102) berechnet wurde, steuert, und
    wobei der Rechenabschnitt (102) die in dem Speicherabschnitt (104) gespeicherte Steuerdauer auf einer Basis des Heißwasserzuführungskapazitätsziels aktualisiert und die aktualisierte Steuerdauer zum Berechnen der Betriebsfrequenz des Kompressors (1) gemäß dem maximalen Wärmeverbrauch an einem folgenden Tag verwendet.

2. Kältekreislaufvorrichtung (100) nach Anspruch 1,
    wobei der Speicherabschnitt (104) eine Standardwärmezuführung speichert, welche einen Standardwert von Wärme anzeigt, welche dem Tankwasser pro Zeiteinheit zuzuführen ist, und
    wobei der Rechenabschnitt (102) nach einem Ablauf der maximalen Verbrauchszeit des derzeitigen Tages die in dem Speicherabschnitt (104) gespeicherte Steuerdauer auf eine neue Steuerdauer gemäß einem Anteil der Standard Wärmezuführung zu dem Heißwasserzuführungskapazitätsziel aktualisiert und die aktualisierte neue Steuerdauer in dem Speicherabschnitt (104) speichert.

3. Kältekreislaufvorrichtung (100) nach Anspruch 1 oder 2, ferner umfassend:

    einen Auslasstemperatursensor (211), welcher eine Temperatur von Ausflusswasser, welches aus einem Auslass des ersten Radiators (17) austritt, in einem Wasserströmungspfad erfasst, wobei der Wasserströmungspfad ein Strömungspfad von Wasser ist, welches in den ersten Radiator (17) von dem Heißwasserspeichertank (27) eintritt, durch den ersten Radiator (17) verläuft und zu dem Heißwasserspeichertank (27) zurückkehrt,
    wobei der Rechenabschnitt (102)

        zu der Zeit, welche der maximalen Verbrauchszeit um die Steuerdauer vorausgeht, die Wärmespeicherung in dem Tankwasser berechnet und auf der Basis der Wärmespeicherung und des maximalen Wärmeverbrauchs des derzeitigen Tages eine Zieltemperatur berechnet, welche eine Zieltemperatur des Ausfluss-

24

wassers anzeigt, um die Wärmespeicherung in dem Tankwasser auf den maximalen Wärmeverbrauch zu der maximalen Verbrauchszeit zu bringen, und

die Betriebsfrequenz des Kompressors (1) zu berechnen, welche die von dem Auslasstemperatursensor (211) erfasste Temperatur des Ausflusswassers auf die Zieltemperatur bringt.

4. Kältekreislaufvorrichtung (100) nach einem der Ansprüche 1-3, ferner umfassend:

einen Tankwassersensor (212-215), welcher eine Temperatur des Tankwassers erfasst,
wobei der Rechenabschnitt (102) die derzeitige Wärmespeicherung in dem Tankwasser unter Verwendung der von dem Tankwassersensor (212-215) erfassten Temperatur des Tankwassers berechnet.

5. Kältekreislaufvorrichtung (100) nach Anspruch 1, ferner umfassend:

einen Einlasstemperatursensor (210), welcher eine Temperatur von Einflusswasser, welches in einen Einlass des ersten Radiators (17) eindringt, in einem Wasserflusspfad erfasst, wobei der Wasserflusspfad ein Flusspfad von Wasser ist, welches von dem Heißwasserspeichertank (27) in den ersten Radiator (17) eindringt, durch den ersten Radiator (17) verläuft und zu dem Heißwasserspeichertank (27) zurückkehrt; und
einen Hochdrucksensor (201), welcher einen hohen Druck von einer Entladeseite des Kompressors (1) zu einer Liquidseite des ersten Druckreduziermechanismus (20) erfasst,
wobei der Rechenabschnitt (102) eine Kondensationstemperatur des ersten Radiators (17) auf einer Basis des von dem Hochdrucksensor (201) erfassten hohen Druckes berechnet; und
wobei der Steuerabschnitt (103) die Betriebsfrequenz des Kompressors (1) durch eine weitere Verwendung der von dem Rechenabschnitt (102) berechneten Kondensationstemperatur und der von dem Einlasstemperatursensor (210) erfassten Temperatur des Einflusswassers steuert.

6. Kältekreislaufvorrichtung (100) nach Anspruch 3, ferner umfassend:

eine Wasserzuführungspumpe (18), welche bewirkt, dass das Wasser durch den Wasserflusspfad fließt; und
einen Einlasstemperatursensor (210), welcher eine Temperatur von Einflusswasser, welches in einen Einlass des ersten Radiators (17) eindringt, in dem Wasserflusspfad erfasst,
wobei der Steuerabschnitt (103) eine Temperaturdifferenz zwischen der Temperatur des von dem Einlasstemperatursensor (210) erfassten Einflusswasser und der Zieltemperatur, welche die Zieltemperatur des Ausflusswassers anzeigt, auf einen vorbestimmten Wert oder mehr hält, in dem eine Flussrate des Einflusswassers, welches in den ersten Radiator (17) eindringt, durch eine Steuerung der Wasserzuführungspumpe (18) gesteuert wird, während die Betriebsfrequenz des Kompressors (1) gesteuert wird.

7. Kältekreislaufvorrichtung (100) nach Anspruch 3, ferner umfassend:

einen Wärmeabführungsabzweigflusspfad, welcher ein Abzweigflusspfad ist, welcher von einer Entladeseite des Kompressors (1) abzweigt, wobei der Wärmeabführungsabzweigflusspfad einen zweiten Radiator (10a, 10b) und einen zweiten Druckreduziermechanismus (8a, 8b) aufweist, wobei der Wärmeabführungsflusspfad in einer Reihenfolge aus dem zweiten Radiator (10a, 10b) und dem zweiten Druckreduziermechanismus (8a, 8b) von der Entladeseite des Kompressors (1) und übergehend mit einem Abschnitt zwischen dem ersten Druckreduziermechanismus (20) und dem ersten Radiator (17) verbunden ist,
wobei aufgrund einer Ausführung eines parallelen Wärmeabführungsbetriebs, welcher bewirkt, dass ein ausgegebenes Kältemittel, welches von dem Kompressor (1) ausgegeben wird, in den ersten Radiator (17) und den zweiten Radiator (10a, 10b) eindringt und dadurch zirkuliert, der Steuerabschnitt (103) die Betriebsfrequenz des Kompressors (1) auf einer Basis einer Wärmelast steuert, welche eine Last anzeigt, welche für den zweiten Radiator (10 a, 10 b) erforderlich ist,
wobei der Rechenabschnitt (102) die Temperatur des Ausflusswassers mit der Zieltemperatur vergleicht, wenn die Betriebsfrequenz des Kompressors (1) auf einer Basis der Wärmelast gesteuert wird,
wobei, wenn die Temperatur des Ausflusswassers kleiner als die Zieltemperatur ist,
der Steuerabschnitt (103) die Betriebsfrequenz des Kompressors (1) auf eine Betriebsfrequenz ändert, welche die Temperatur des Ausflusswassers auf die Zieltemperatur bringt.

8. Kältekreislaufvorrichtung (100) nach Anspruch 3, ferner umfassend:

einen Wärmeabführungsabzweigflusspfad, welcher von einem Abzweigteil zwischen dem ersten Druckreduziermechanismus (20) und dem ersten Verdampfer (4) abzweigt, wobei der Wärmeabführungsabzweigflusspfad einen zweiten Druckreduziermechanismus (8a, 8b) und einen zweiten Verdampfer aufweist, wobei der Wärmeabführungsabzweigflusspfad in einer Reihenfolge aus dem zweiten Druckreduziermechanismus (8a, 8b) und dem zweiten Verdampfer von dem Abzweigteil und übergehend mit einer Saugseite des Kompressors (1) verbunden ist,

wobei der Steuerabschnitt (103) aufgrund eines Ausführens eines parallelen Wärmeentfernungs- und Wärmeabführungsbetriebs, welches ein paralleler Betrieb eines Wärmeabführungsbetriebs des ersten Radiator (17) und ein Wärmeentfernungbetrieb des zweiten Verdampfers ist, wobei der Wärmeabführungsbetrieb bewirkt, dass das ausgegebene Kältemittel, welches von dem Kompressor (1) ausgegeben wird, von der Saugseite über den ersten Radiator (17), den ersten Druckreduziermechanismus (20), den Abzweigteil und den ersten Verdampfer (4) in den Kompressor (1) gesaugt wird, wobei der Wärmeentfernungbetrieb bewirkt, dass ausgegebenes Kältemittel über den ersten Radiator (17), den ersten Druckreduziermechanismus (20), den Abzweigteil, den zweiten Druckreduziermechanismus (8a, b) und den zweiten Verdampfer (10a, 10b) von der Saugseite in den Kompressor (1) gesaugt wird, die Betriebsfrequenz des Kompressors (1) auf einer Basis einer Kühllast gesteuert wird, welche eine Last anzeigt, welche von dem zweiten Verdampfer benötigt wird,

wobei der Rechenabschnitt (102) die Temperatur des Ausflusswassers mit der Zieltemperatur vergleicht, wenn die Betriebsfrequenz des Kompressors (1) auf einer Basis der Kühllast gesteuert wird, und

wenn die Temperatur des Auslasswassers geringer als die Zieltemperatur ist,

der Steuerabschnitt (103) die Betriebsfrequenz des Kompressors (1) auf eine Betriebsfrequenz ändert, welche die Temperatur des Ausflusswassers auf die Zieltemperatur bringt.

9. Kältekreislaufsteuerverfahren für eine Kältekreislaufvorrichtung (100), durch welche ein Kältemittel zirkuliert, wobei die Kältekreislaufvorrichtung (100) aufweist:

einen Kältekreislaufmechanismus, welcher einen Kompressor (1), dessen Betriebsfrequenz gesteuert werden kann, einen ersten Radiator (17), welcher Wärme mittels des Kältemittels zu Tankwasser zuführt, welches in einem Heißwasserspeichertank (27) gespeichertes Wasser ist, einen ersten Druckreduziermechanismus (20) und einen ersten Verdampfer (4) aufweist, wobei das Kältemittel in einer Reihenfolge aus dem Kompressor (1), dem ersten Radiator (17), dem ersten Druckreduziermechanismus (20) und dem ersten Verdampfer (4) zirkuliert;

einen Speicherabschnitt (104), welcher eine Steuerdauerinformation speichert, welche eine voreingestellt Steuerdauer anzeigt und in der Lage ist, andere Informationen zu speichern,

einen Rechenabschnitt (102), welcher einen Wärmeverbrauch auf einer Zeitdauerbasis berechnet, wobei der Wärmeverbrauch eine Menge von Wärme anzeigt, welche in der Zeitdauer von dem Tankwasser zu einer Außenseite geführt wurde, wobei die Zeitdauer eine von geteilten vorbestimmten Zeitdauern eines Tages ist, den berechneten Wärmeverbrauch und einen entsprechenden Zeitpunkt in dem Speicherabschnitt (104) speichert und eine derzeitige Wärmespeicherung in dem Tankwasser berechnet, und

einen Steuerabschnitt (103), welcher die Betriebsfrequenz des Kompressors (1) steuert,

wobei das Kältekreislaufsteuerverfahren umfasst:

Berechnen, mit dem Rechenabschnitt (102), eines maximalen Wärmeverbrauchs, welcher der Größte unter anderen an einem derzeitigen Tag zu erzeugenden Wärmeverbräuchen ist, aus den in dem Speicherabschnitt (104) gespeicherten Wärmeverbräuchen von mindestens einem Tag in der Vergangenheit und einer maximalen Verbrauchszeit, welche ein entsprechender Zeitpunkt für den maximalen Wärmeverbrauch ist;

Berechnen, mit dem Rechenabschnitt (102), der Wärmespeicherung in dem Tankwasser zu einer Zeit, welche der maximalen Verbrauchszeit um die Steuerdauer vorausgeht, und Berechnen eines Heißwasserzuführungskapazitätsziel und der Betriebsfrequenz des Kompressors (1) auf einer Basis der Wärmespeicherung und des maximalen Wärmeverbrauchs des derzeitigen Tages, wobei das Heißwasserzuführungskapazitätsziel ein Heißwasserzuführungskapazitätsziel ist, welches als ein Wärmeabführungszielwert dient, welcher für den ersten Radiator (17) notwendig ist, um die Wärmespeicherung in dem Tankwasser auf den maximalen Wärmeverbrauch bei der maximalen Verbrauchszeit zu bringen,

Steuern, mit dem Steuerabschnitt (103), des Kompressors (1) bei der Betriebsfrequenz, welche von dem Rechenabschnitt (102) berechnet wurde, und

Aktualisieren, mit dem Rechenabschnitt (102), der in dem Speicherabschnitt (104) gespeicherten Steuerdauer auf einer Basis des Heißwasserzuführungskapazitätsziels und Verwenden der aktualisierten Steuerdauer zum Berechnen der Betriebsfrequenz des Kompressors (1) gemäß dem maximalen Wärmeverbrauch an dem folgenden Tag.

**Revendications**

1. Appareil à cycle de réfrigération (100), dans lequel un fluide frigorigène est amené à circuler, comportant un mécanisme pour cycle de réfrigération qui comprend un compresseur (1) dont la fréquence de mise en marche peut être commandée, un premier radiateur (17) qui, à l'aide du fluide frigorigène, fournit de la chaleur à de l'eau d'un réservoir, à savoir de l'eau stockée dans une cuve de stockage (27) d'eau chaude, un premier mécanisme de réduction de pression (20) et un premier évaporateur (4), le fluide frigorigène circulant du compresseur (1) au premier évaporateur (4) via le premier radiateur (17) et le premier mécanisme de réduction de pression (20) ; et un automate (110),
l'automate (110) comprenant

une section mémoire (104) qui contient des informations de période de commande indiquant une période de commande préétablie et qui peut contenir d'autres informations,
une section calcul (102) qui calcule une consommation de chaleur sur la base d'un laps de temps, la consommation de chaleur indiquant une quantité de chaleur fournie à l'extérieur durant le laps de temps par l'eau du réservoir, le laps de temps étant une division de laps de temps prédéterminés d'une journée, mémorise dans la section mémoire (104) la consommation de chaleur calculée et un instant correspondant, et calcule le stockage instantané de chaleur dans l'eau du réservoir, et
une section commande (103) qui commande la fréquence de mise en marche du compresseur (1),

dans lequel la section calcul (102),
d'après les consommations de chaleur d'au moins un jour passé mémorisées dans la section mémoire (104), calcule une consommation maximale de chaleur qui doit être la plus forte parmi d'autres consommations de chaleur à générer un jour en cours et un moment de consommation maximale qui est un instant correspondant à la consommation maximale de chaleur,
à un moment qui précède le moment de consommation maximale dans une mesure égale à la période de commande, calcule le stockage de chaleur dans l'eau du réservoir et, d'après le stockage de chaleur et la consommation maximale de chaleur du jour en cours, calcule un objectif de capacité de fourniture d'eau chaude et la fréquence de mise en marche du compresseur (1), l'objectif de capacité de fourniture d'eau chaude servant de valeur visée de rejet de chaleur nécessaire pour le premier radiateur (17) afin d'amener le stockage de chaleur dans l'eau du réservoir à permettre la consommation maximale de chaleur au moment de consommation maximale,
dans lequel la section commande (103) commande le compresseur (1) à la fréquence de mise en marche calculée par la section calcul (102), et
dans lequel la section calcul (102) actualise la période de commande mémorisée dans la section mémoire (104) d'après l'objectif de capacité de fourniture d'eau chaude et utilise la période de commande actualisée pour calculer la fréquence de mise en marche du compresseur (1) d'après la consommation maximale de chaleur un jour suivant.

2. Appareil à cycle de réfrigération (100) selon la revendication 1,
dans lequel la section mémoire (104) mémorise la fourniture ordinaire de chaleur qui indique une valeur type de chaleur à fournir par unité de temps à l'eau du réservoir, et
dans lequel la section calcul (102), au terme du moment de consommation maximale du jour en cours, actualise la période de commande mémorisée dans la section mémoire (104) pour définir une nouvelle période de commande d'après une proportion de la fourniture ordinaire de chaleur par rapport à l'objectif de capacité de fourniture d'eau chaud et mémorise dans la section mémoire (104) la nouvelle période de commande actualisée.

3. Appareil à cycle de réfrigération (100) selon la revendication 1 ou 2, comportant en outre :

un capteur de température de sortie (211) qui détecte une température du flux d'eau de départ sortant par une sortie du premier radiateur (17) sur un circuit d'eau, le circuit d'eau étant un circuit d'eau qui entre dans le premier radiateur (17) depuis le réservoir de stockage (27) d'eau chaude, passe dans le premier radiateur (17) et revient au réservoir de stockage (27) d'eau chaude,
dans lequel la section calcul (102),

au moment qui précède le moment de consommation maximale dans une mesure égale à la période de commande, calcule le stockage de chaleur dans l'eau du réservoir et, d'après le stockage de chaleur et la consommation maximale de chaleur du jour en cours, calcule un objectif de température indiquant une température visée de flux d'eau de départ afin d'amener le stockage de chaleur dans l'eau du réservoir à permettre la consommation maximale de chaleur au moment de consommation maximale, et

calcule la fréquence de mise en marche du compresseur (1) qui met la température du flux d'eau de sortie détectée par le capteur de température de sortie (211) à une valeur à égale la température visée.

4. Appareil à cycle de réfrigération (100) selon l'une quelconque des revendications 1 à 3, comportant en outre :

un détecteur (212 à 215) d'eau du réservoir qui détecte une température de l'eau du réservoir,
dans lequel la section calcul (102) calcule le stockage instantané de chaleur dans l'eau du réservoir à l'aide de la température de l'eau du réservoir détectée par le détecteur (212 à 215) d'eau du réservoir.

5. Appareil à cycle de réfrigération (100) selon la revendication 1, comportant en outre :

un capteur de température d'eau d'entrée (210) qui détecte une température du flux d'eau d'arrivée entrant par une entrée du premier radiateur (17) sur un circuit d'eau, le circuit d'eau étant un circuit d'eau qui entre dans le premier radiateur (17), passe dans le premier radiateur (17) et revient au réservoir de stockage (27) d'eau chaude ; et
un détecteur de haute pression (201) qui détecte une haute pression depuis un côté refoulement du compresseur (1) jusqu'à un côté liquide de premier mécanisme de réduction de pression (20),
dans lequel la section calcul (102) calcule une température de condensation du premier radiateur (17) d'après la haute pression détectée par le détecteur de haute pression (201),
dans lequel la section de commande (103) commande la fréquence de mise en marche du compresseur (1) en utilisant en outre la température de condensation calculée par la section calcul (102) et la température du flux d'eau d'arrivée détectée par le capteur de température d'entrée (210).

6. Appareil à cycle de réfrigération (100) selon la revendication 3, comportant en outre :

une pompe d'alimentation en eau (18) qui fait circuler l'eau dans le circuit d'eau ; et
un capteur de température d'entrée (210) qui détecte une température du flux d'eau d'arrivée entrant par une entrée du premier radiateur (17) sur le circuit d'eau,
dans lequel la section commande (103) maintient une différence de température, entre la température du flux d'eau d'arrivée détectée par le capteur de température d'entrée (210) et l'objectif de température indiquant la température visée du flux d'eau de départ, à une valeur déterminée ou plus en commandant un débit du flux d'eau d'arrivée entrant dans le premier radiateur (17) à l'aide d'une commande de la pompe d'alimentation en eau (18), tout en commandant la fréquence de mise en marche du compresseur (1).

7. Appareil à cycle de réfrigération (100) selon la revendication 3, comportant en outre :

une branche de circuit pour rejet de chaleur qui est une branche de circuit partant d'un côté refoulement du compresseur (1), la branche de circuit pour rejet de chaleur ayant un second radiateur (10a, 10b) et un second mécanisme de réduction de pression (8a, 8b), le circuit de rejet de chaleur étant relié, d'abord par le second radiateur (10a, 10b) puis par le second mécanisme de réduction de pression (8a, 8b) depuis le côté refoulement du compresseur (1) et fusionnant avec un tronçon entre le premier mécanisme de réduction de pression (20) et le premier radiateur (17),
dans lequel, au moment de l'exécution d'une opération de rejet parallèle de chaleur qui amène un fluide frigorigène refoulé par le compresseur (1) à entrer dans le premier radiateur (17) et le second radiateur (10a, 10b) et à y circuler, la section commande (103) commande la fréquence de mise en marche du compresseur (1) d'après une charge de chauffage indiquant une charge nécessaire pour le second radiateur (10a, 10b),
dans lequel la section calcul (102) compare avec la température visée la température du flux d'eau de départ au moment où la fréquence de mise en marche du compresseur (1) est commandée d'après la charge de chauffage,
si la température du flux d'eau de départ est inférieure à la température visée,
la section commande (103) modifie la fréquence de mise en marche du compresseur (1) pour passer à une fréquence de fonctionnement qui rend la température du flux d'eau de départ égale à la température visée.

8. Appareil à cycle de réfrigération (100) selon la revendication 3, comportant en outre :

une branche de circuit pour évacuation de chaleur qui part d'une ramification entre le premier mécanisme de réduction de pression (20) et le premier évaporateur (4), la branche de circuit pour évacuation de chaleur ayant un second mécanisme de réduction de pression (8a, 8b) et un second évaporateur, la branche de circuit d'évacuation de chaleur étant reliée, d'abord par le second mécanisme de réduction de pression (8a, 8b) puis par le second évaporateur, depuis la ramification et fusionnant avec un côté aspiration du compresseur (1), dans lequel la section commande (103), au moment de l'exécution d'une opération d'évacuation de chaleur en parallèle avec une opération de rejet de chaleur qui consiste en une opération de rejet de chaleur du premier radiateur (17) en parallèle avec une opération d'évacuation de chaleur du second évaporateur, l'opération de rejet de chaleur amenant le fluide frigorigène refoulé par le compresseur (1) à être introduit par aspiration dans le compresseur (1) depuis le côté aspiration via le premier radiateur (17), le premier mécanisme de réduction de pression (20), la ramification et le premier évaporateur (4), l'opération d'évacuation de chaleur amenant le fluide frigorigène refoulé par le compresseur (1) à être introduit par aspiration dans le compresseur (1) depuis le côté aspiration via le premier radiateur (17), le premier mécanisme de réduction de pression (20), la ramification, le second mécanisme de réduction de pression (8a, 8b) et le second évaporateur (10a, 10b), commande la fréquence de mise en marche du compresseur (1) d'après une charge de refroidissement indiquant une charge nécessaire pour le second évaporateur,

dans lequel la section calcul (102) compare avec la température visée la température du flux d'eau de départ lorsque la fréquence de mise en marche du compresseur (1) est commandée d'après la charge de refroidissement, et

si la température du flux d'eau de départ est inférieure à la température visée,

la section commande (103) modifie la fréquence de mise en marche du compresseur (1) pour passer à une fréquence de fonctionnement qui rend la température du flux d'eau de départ égale à la température visée.

9. Procédé de commande de cycle de réfrigération pour un appareil à cycle de réfrigération (100), dans lequel un fluide frigorigène est amené à circuler, l'appareil à cycle de réfrigération (100) comportant

un mécanisme pour cycle de réfrigération qui comprend un compresseur (1) dont la fréquence de mise en marche peut être commandée, un premier radiateur (17) qui, à l'aide du fluide frigorigène, fournit de la chaleur à de l'eau d'un réservoir, à savoir de l'eau stockée dans une cuve de stockage (27) d'eau chaude, un premier mécanisme de réduction de pression (20) et un premier évaporateur (4), le fluide frigorigène circulant du compresseur (1) au premier évaporateur (4) via le premier radiateur (17) et le premier mécanisme de réduction de pression (20),

une section mémoire (104) qui contient des informations de période de commande indiquant une période de commande préétablie et qui peut contenir d'autres informations,

une section calcul (102) qui calcule une consommation de chaleur sur la base d'un laps de temps, la consommation de chaleur indiquant une quantité de chaleur fournie à l'extérieur durant le laps de temps par l'eau du réservoir, le laps de temps étant une division de laps de temps prédéterminés d'une journée, mémorise dans la section mémoire (104) la consommation de chaleur calculée et un instant correspondant, et calcule le stockage instantané de chaleur dans l'eau du réservoir, et

une section commande (103) qui commande la fréquence de mise en marche du compresseur (1),

le procédé de commande de cycle de réfrigération comportant :

d'après les consommations de chaleur d'au moins un jour passé mémorisées dans la section mémoire (104), le calcul, par la section calcul (102), d'une consommation maximale de chaleur qui doit être la plus forte parmi d'autres consommations de chaleur à générer un jour en cours et un moment de consommation maximale qui est un instant correspondant à la consommation maximale de chaleur,

à un moment qui précède le moment de consommation maximale dans une mesure égale à la période de commande, le calcul, par la section calcul (102), du stockage de chaleur dans l'eau du réservoir et, d'après le stockage de chaleur et la consommation maximale de chaleur du jour en cours, le calcul d'un objectif de capacité de fourniture d'eau chaude et de la fréquence de mise en marche du compresseur (1), l'objectif de capacité de fourniture d'eau chaude étant une valeur de capacité de fourniture d'eau chaude servant de valeur visée de rejet de chaleur nécessaire pour le premier radiateur (17) afin d'amener le stockage de chaleur dans l'eau du réservoir à permettre la consommation maximale de chaleur au moment de consommation maximale ;

la commande, par la section commande (103), du compresseur (1) à la fréquence de mise en marche calculée par la section calcul (102) ; et

l'actualisation, par la section calcul (102), de la période de commande mémorisée dans la section mémoire (104) d'après l'objectif de capacité de fourniture d'eau chaude, et l'utilisation de la période de commande actualisée pour calculer la fréquence de mise en marche du compresseur (1) d'après la consommation maximale de chaleur le jour suivant.

FIG. 1

EP 2 677 251 B1

F I G. 2

FIG. 3

EP 2 677 251 B1

32

F I G. 4

| | COOLING OPERATION A | HEATING OPERATION B | HOT WATER SUPPLY OPERATION C | SIMULTANEOUS HEATING AND HOT WATER SUPPLY OPERATION D | SIMULTANEOUS COOLING AND HOT WATER SUPPLY OPERATION E |
|---|---|---|---|---|---|
| FOUR-WAY VALVE 3 | SOLID LINE | BROKEN LINE | BROKEN LINE | BROKEN LINE | SOLID LINE |
| FIRST DISCHARGE SOLENOID VALVE 2 | OPEN | OPEN | CLOSE | OPEN | CLOSE |
| SECOND DISCHARGE SOLENOID VALVE 15 | CLOSE | CLOSE | OPEN | OPEN | OPEN |
| LOW-PRESSURE EQUALIZING SOLENOID VALVE 21 | CLOSE | CLOSE | CLOSE | CLOSE | OPEN |

FIG. 5

HEAT CONSUMPTION [kJ]

MAXIMUM HEAT
CONSUMPTION Lm

TIME [h:mm]

MAXIMUM CONSUMPTION
TIME tm

EP 2 677 251 B1

F I G. 6

HOT-WATER HEAT STORED IN
HOT WATER STORAGE TANK 27 [kj]

TARGET HOT-WATER HEAT STORAGE
(MAXIMUM HEAT CONSUMPTION) Lm

(HOT WATER SUPPLY
CAPACITY $Q_{wm}$)×$\Delta t$

HEAT AT START OF HOT
WATER SUPPLY Li

HOT WATER
SUPPLY TIME $\Delta t$

TIME [h:mm]

HOT WATER SUPPLY START TIME ti

TARGET HOT WATER SUPPLY COMPLETION TIME
(MAXIMUM CONSUMPTION TIME) tm

FIG. 7

WATER EXIT ←

UPPERMOST PART - - - - - - - - - - - - - - - - - - - - - - - - - - - - - -

FIRST UPPER PART - - - - - - - - - - - - - - - - - - - - - - - - - - -

SECOND UPPER PART - - - - - - - - - - - - - - - - - - - - -

THIRD UPPER PART - - - - - - - - - - - - - - - - -

LOWERMOST PART - - - - - - - - - - - - - - - - - - - - - - - - - - - - - -

WATER SUPPLY

218

216

27

212

213

214

215

217

Ttank1

Ttank2

Ttank3

Ttank1

Ttankwi

V1  V2  V3  V4

EP 2 677 251 B1

F I G. 8

EP 2 677 251 B1

```
                          ╭─────────────╮
                          │    START    │
                          ╰─────────────╯
                                 │
   S11    ┌──────────────────────────────────────┐
   ~      │ START SIMULTANEOUS HEATING AND        │
          │ HOT WATER SUPPLY OPERATION MODE D     │
          └──────────────────────────────────────┘
                                 │
   S12    ┌──────────────────────────────────────┐
   ~      │ CONTROL OPERATING FREQUENCY OF COMPRE-│
          │ SSOR 1 IN ACCORDANCE WITH HEATING LOAD│
          │ AS IN HEATING OPERATION MODE B        │
          └──────────────────────────────────────┘
                                 │
   S13    ┌──────────────────────────────────────┐
   ~      │ COMPUTE OUTLET WATER TEMPERATURE      │
          │ TARGET Twom                           │
          └──────────────────────────────────────┘
                                 │
   S14                        ╱     ╲
   ~                       ╱           ╲
                        ╱  OUTLET WATER  ╲
                     ╱ TEMPERATURE Two ≥    ╲       NO
                    ⟨ OUTLET WATER TEMPERATURE⟩ ─────────┐
                     ╲ TARGET Twom? (HOT WATER╱          │
                       ╲ CAPACITY ≥ HOT      ╱           │
                         ╲ WATER CAPACITY  ╱             │
                           ╲ TARGET?)   ╱                │
                              ╲     ╱                    │
                              YES │           S16        │
   S15                            │           ~          │
   ~   ┌──────────────────────┐   │   ┌───────────────────────────────┐
       │ MAINTAIN OPERATING   │   │   │ INCREASE OPERATING FREQUENCY OF│
       │ FREQUENCY            │   │   │ COMPRESSOR 1 UNTIL OUTLET WATER│
       │ OF COMPRESSOR 1 AS IT IS │ │ TEMPERATURE Two BECOMES EQUAL  │
       └──────────────────────┘   │   │ TO OUTLET WATER TEMPERATURE    │
                    │             │   │ TARGET Twom                    │
                    │             │   └───────────────────────────────┘
                    │             │                     │
                    └─────────────┼─────────────────────┘
                                  │
                          ╭─────────────╮
                          │     END     │
                          ╰─────────────╯
```

```
                        ┌──────────────┐
                        │    START     │
                        └──────────────┘
                                │
S21   ┌─────────────────────────────────────────────┐
      │ START SIMULTANEOUS COOLING AND               │
      │ HOT WATER SUPPLY OPERATION MODE E            │
      └─────────────────────────────────────────────┘
                                │
S22   ┌─────────────────────────────────────────────┐
      │ CONTROL OPERATING FREQUENCY OF COMPRE-        │
      │ SSOR 1 IN ACCORDANCE WITH HEATING LOAD        │
      │ AS IN COOLING OPERATION MODE A               │
      └─────────────────────────────────────────────┘
                                │
S23   ┌─────────────────────────────────────────────┐
      │ COMPUTE OUTLET WATER TEMPERATURE             │
      │ TARGET Twom                                  │
      └─────────────────────────────────────────────┘
                                │
S24                    ◇──────────────────◇
              OUTLET WATER TEMPERATURE Two ≥                NO
              OUTLET WATER TEMPERATURE TARGET
              Twom? (HOT WATER CAPACITY ≥ HOT
                   WATER CAPACITY TARGET?)
```

S24 OUTLET WATER TEMPERATURE Two ≥ OUTLET WATER TEMPERATURE TARGET Twom? (HOT WATER CAPACITY ≥ HOT WATER CAPACITY TARGET?)

NO

S26 INCREASE OPERATING FREQUENCY OF COMPRESSOR 1 UNTIL OUTLET WATER TEMPERATURE Two BECOMES EQUAL TO OUTLET WATER TEMPERATURE TARGET Twom

YES

S25 MAINTAIN OPERATING FREQUENCY OF COMPRESSOR 1 AS IT IS

```
                        ┌──────────────┐
                        │     END      │
                        └──────────────┘
```

EP 2 677 251 B1

## REFERENCES CITED IN THE DESCRIPTION

### Patent documents cited in the description

- JP 2007147246 A
- JP 3855985 B
- JP 2004340532 A
- JP 2003139391 A
- JP 2007218463 A